# EUROPEAN PATENT SPECIFICATION

(11) **EP 3 350 260 B1**
(45) Date of publication and mention of the grant of the patent: **08.07.2020**
(21) Application number: 16810455.2
(22) Date of filing: 16.09.2016
(51) Int. Cl.: C08L 7/00, B60C 1/00, C08K 5/01, C08L 9/00, C08L 9/06, B29B 7/18, B29B 7/48, B29B 7/60, B29B 7/74, B29B 7/90, C08K 3/04, C08K 3/36

(54) **WINTER TYRES**
WINTERREIFEN
PNEUMATIQUES D'HIVER

(30) Priority: 18.09.2015 IT UB20153718
(43) Date of publication of application: 25.07.2018
(73) Proprietor: Pirelli Tyre S.p.A., 20126 Milano (IT)
(72) Inventor: WAGEMANN, Juergen, I-20126 Milano (IT); DE CANCELLIS, Pierluigi, I-20126 Milano (IT); RATTI, Giuseppina, I-20126 Milano (IT); LOSTRITTO, Angela, 20126 Milano (IT); SCURATI, Alberto, I-20126 Milano (IT); QUINZANI, Paolo, I-20126 Milano (IT)
(74) Representative: PGA S.p.A.
(86) International application number: PCT/IB2016/055551
(87) International publication number: WO 2017/046771

(56) References cited:
- EP-A1- 1 035 164
- EP-A1- 1 052 270
- EP-A1- 1 514 901
- EP-A1- 2 468 815
- EP-A2- 1 085 046
- EP-A2- 2 009 047
- WO-A1-2008/145155
- US-B1- 6 525 133

## Description

### FIELD OF THE INVENTION

The present invention relates to enhanced winter tyres which have excellent grip and braking performance on snow and, at the same time, on wet and dry roads for use in any weather conditions.

### PRIOR ART

Patents are known relating to tyres comprising compositions which include, inter alia, liquid polymers. US2007135564 refers to the use of liquid polymers in tread materials to improve abrasion resistance and, in combination with highly structured carbon black and crosslinked plasticisers, to impart good dry braking performance and acceptable winter properties.

US4840988 describes the application of liquid polymers in tread materials to improve the grip on snow and ice and reduce the deterioration of performance.

US5851321 describes the use of liquid polymers to improve the ageing resistance of the materials - in particular to reduce the hardness changes during the storage period - and the grip performance on snow and ice.

US2013289197 describes the use of SBR rubbers diluted with liquid polymers rather than standard mineral oils, reporting advantages in terms of wear resistance, rolling resistance and wet braking, with less satisfactory results in the dry braking level.

EP1990217 describes treads for winter tyres in two layers, wherein the material of the outermost layer, comprising liquid polymers, is softer.

WO2008145155 describes tyres comprising a composition comprising liquid polymers of the SBR type, in combination with coupling agents containing at least one SH group; in the document, winter properties or applications are not discussed.

EP2009047 describes compositions for tyres comprising liquid isoprene rubbers or a terpene resin; in the document, winter properties or applications are not discussed.

Some patents are known relating to tyres comprising compositions which include, inter alia, resins and oils.

WO2013039499 describes a plasticising system for tread materials - comprising resins formed by terpene copolymers and vinyl aromatic compounds, in particular styrene and limonene copolymers and MES or TDAE oils - wherein said materials exhibit improved wet and dry braking properties and wear resistance.

WO2013032468 describes the use of plasticising mixtures in tread materials comprising resins (polylimonene) and oils (derived from petroleum or vegetable source) together with specific patterns and structures of the tread itself (density of the recesses), to improve the dry and snow drive on the corresponding tyres.

WO2007017060 describes plasticising mixtures - comprising resins (terpene/vinyl aromatic compounds, in particular limonene/styrene copolymers) and process oils such as MES and TDAE - for tread materials, mixtures which impart superior resistance to breakage, chipping and separation of parts from the tread.

WO2004022644 describes soft tread compositions which contain a combination of hydrocarbon resins (Resen2495) and of a vegetable plasticising oil (sunflower oil). According to what stated, in this patent application, winter tyres exhibit better wear resistance properties with the same grip on snow and on wet roads. Some patents are known relating to compositions for tyres comprising resins in combination with liquid polymers.

EP2468815 describes materials comprising resins in combination with liquid polymers, of the styrene-butadiene or polybutadiene type, and with solid polymers, of the styrene-butadiene or polybutadiene type; such materials are used to make tyres with balanced wet grip, wear resistance and rolling properties. The document does not discuss winter properties or applications.

EP1085046 describes electrically conductive compositions for tyres comprising resins in combination with liquid polyisoprene tyres preferably positioned on, or inside the innermost surface of a tyre. US6525133 describes compositions for treads of tyres comprising resins in combination with liquid polymers of the SBR type.

EP1514901 describes compositions for tyres comprising resins in combination with liquid polymers of the SBR type.

EP1035164 describes compositions for tyre treads comprising resins in combination with liquid polymers, of the PBD type, and with solid elastomer, which can also be of the isoprene type, but does not describe compositions having the combination of features of the composition of the invention. Some patents are known which describe the use of continuous mixers in the preparation of compositions for tyres.

WO2014191953, to the name of the Applicant, describes compositions for the treads of HP, UHP and racing tyres, comprising resins in high amounts to increase the adherence thereof to the asphalt. The incorporation of the resins is carried out in a continuous mixer, downstream of one or more conventional mixing (in batches) of the other ingredients. The materials thus obtained exhibit, at temperatures above 0 °C, an increase in hysteresis (tan delta) and a reduction of the modulus - attributable to the uniform dispersion of the resin - that are said to be predictive of better performance in terms of grip, drive and/or of road holding of the tyre. The document does not discuss winter properties or applications.

### SUMMARY OF THE INVENTION

Within the scope of winter tyres, car manufacturers require increasingly higher performance both on dry and wet, with increased grip at low temperatures without unbalancing the overall properties. Ideally, in fact, one would like equally performing tyres on all types of road surfaces and in any weather and temperature condition. This result is very difficult to achieve.

Drive and braking at low temperatures are in fact conflicting performances with respect to the behaviour on dry or wet surfaces, and being able to make a winter tyre simultaneously characterised by all of these properties is a particularly challenging goal.

Possible foreseeable changes of the compositions such as, for example, increasing the content of the filler or varying the amount of conventional plasticisers such as mineral oils, or using plasticising mixtures with different glass transition temperature Tg, prove substantially ineffective per se. According to the Applicant, the documents cited above do not teach how to improve the dry performance and grip on the snow, properties that are increasingly sought after by manufacturers of vehicles with regard to the performance of winter tyres.

The Applicant has posed the problem of how to impart a satisfactory controllability on dry and wet surfaces and at the same time high performance at low temperatures and on the snow to vehicle tyres for winter use.

The Applicant has surprisingly found a new composition for winter tyres which, due to the presence of a specific plasticising mixture, keeps an adequate behaviour on dry and wet, a good rolling and wear resistance, thereby unexpectedly improving driving and braking on snow.

Therefore, a first aspect of the present invention is a vulcanisable elastomeric composition for winter tyres comprising at least
one quantity X equal to at least 1 phr of at least one liquid polymer (A) selected from among a liquid polybutadiene, a liquid polyisoprene and/or mixtures thereof,
one quantity Y equal to at least 11 phr of at least one resin (B),
100 phr of a mixture of solid diene elastomeric polymers (D),
wherein said mixture (D) comprises:
from 0 to 95 phr, preferably from 20 to 95 phr, of at least one styrene-butadiene polymer (SBR),
from 0 to 95 phr, preferably from 0 to 60 phr, of at least one polybutadiene polymer (BR), and
from 5 to 100 phr, preferably from 5 to 80 phr, of at least one polyisoprene polymer (IR),
at least 10 phr of at least one reinforcing filler (E), and
0.05 phr of at least one vulcanising agent (F).

A second aspect of the present invention consists of a component for winter tyres comprising an elastomeric composition obtained by using the vulcanisable elastomeric composition according to the invention.

Preferably, said component is a tread band. A third aspect of the present invention is a winter tyre for vehicles comprising a tyre component, preferably a tread band, comprising a vulcanised elastomeric composition obtained by vulcanisation of the vulcanisable elastomeric composition according to the invention.

### DETAILED DESCRIPTION OF THE INVENTION

The term "phr" (parts per hundreds of rubber) means the parts by weight of a given component of the vulcanisable elastomeric composition by 100 parts by weight of the solid diene elastomeric polymer (D).

Unless otherwise indicated, all the percentages are expressed as percentages by weight.

The vulcanisable elastomeric composition for winter tyres according to the invention is characterized by one or more of the following preferred aspects taken alone or in combination with one another.

The composition comprises one quantity X of at least one liquid polymer (A) selected from a liquid polybutadiene, a liquid polyisoprene and mixtures of liquid polybutadiene and liquid polyisoprene (A), wherein said quantity X is at least 1 phr, preferably at least 3 phr or 5 phr or 10 phr or 15 phr or 20 phr. The composition preferably comprises one quantity X of at least one liquid polymer (A) selected from a liquid polybutadiene, a liquid polyisoprene and mixtures thereof (A) of less than 70 phr, more preferably less than 60 phr, even more preferably less than 50 phr.

The composition preferably comprises one quantity X of at least one liquid polymer (A) selected from a liquid polybutadiene, a liquid polyisoprene and mixtures thereof (A) comprised between 3 and 70 phr or between 5 and 60 phr or between 5 and 50 phr or between 5 and 40 phr or between 5 and 30 phr. Preferably, said quantity X consists of at least one liquid polybutadiene or at least one liquid polyisoprene or mixtures thereof, and does not comprise other types of liquid polymers.

Preferably, the composition does not comprise other types of liquid polymers in addition to the liquid polybutadiene, the liquid polyisoprene and mixtures thereof.

The term "liquid polymer" means a diene polymer derived from the polymerisation of one or more monomers, among which at least one is a conjugated diene, said polymer at the temperature of 23 °C being a pourable liquid or a low viscosity fluid.

Preferably, the liquid polymer (A) is characterised by one or more of the following parameters:
a weight average molecular weight (Mw) not higher than 80000 g/mol, and/or
a glass transition temperature (Tg) lower than 0 °C.

The weight average molecular weight (Mw) may be measured according to known techniques in the field such as for example by GPC (Gel Permeation Chromatography) according to the ISO 13885 method.

The glass transition temperature Tg can be conveniently measured by using a differential scanning calorimeter (DSC) according to methods well known to those skilled in the art (ISO 22768 "Rubber, Raw - Determination of the glass transition temperatures by differential scanning calorimetry (DSC)". Preferably, the liquid polymer (A) is characterised by a (Mw) of between 500 and 80000 g/mol, more preferably between 500 and 60000 g/mol.

Preferably, the liquid polymer (A) is characterised by a glass transition temperature (Tg) of between - 105 and 0 °C, more preferably between -100 °C and -50 °C.

The at least one liquid polymer (A) can be a liquid polybutadiene, optionally mixed with a liquid polyisoprene.

Preferably, the liquid polybutadiene (A) is characterised by weight average molecular weight of between 500 and 80000 g/mol, preferably between 500 and30000 g/mol, between 1000 and 20000 g/mol.

Preferably, the liquid polybutadiene (A) is characterised by a glass transition temperature (Tg) of between -105 and 0 °C, more preferably between -95 °C and -50 °C.

Preferably, the liquid polybutadiene (A) has a vinyl content of between 0 and 90%, preferably between 1 and 50%.

Possibly, the liquid polybutadiene (A) can be modified with maleic anhydride, esterified or acid carboxylic groups, epoxy groups or hydroxyl groups or trialkoxy-silyl groups.

Examples of suitable liquid polybutadienes (A) are:
- liquid polymers based on butadiene (BR) marketed by Evonik under the trade name POLYVEST 110, POLYVEST 130, POLYVEST MA 75; marketed by Kuraray under the trade name LBR 307, LBR 305, LBR 300; and marketed by Cray Valley under the trade name RICON 130, RICON 130 MA8, RICON 130 MA 13, RICON 150, RICON 156, RICON 157.

The at least one liquid polymer (A) can be a liquid polyisoprene (IR), optionally mixed with a liquid polybutadiene.

Preferably, the liquid polyisoprene has a weight average molecular weight of between 3000 and 80000 g/mol, preferably between 10000 and 60000 g/mol.

Preferably, the liquid polyisoprene has a glass transition temperature (Tg) of between -70 °C and -30 °C.

Possibly, the liquid polyisoprene can be modified with maleic anhydride, esterified or acid carboxylic groups, epoxy groups, hydroxyl groups or trialkoxy-silyl groups.

Examples of suitable liquid polyisoprenes A are liquid polymers based on isoprene (IR) marketed by Kuraray under the trade name LIR 30, LIR 50, LIR 403, LIR 410, among natural polyisoprenes: DPR 35, DPR 40, DPR75, DPR 400 of DPR INDUSTRIES.

Preferably, the at least one liquid polymer (A) is a liquid polybutadiene.

The vulcanisable elastomeric composition for winter tyres according to the invention comprises one 11 quantity Y equal to at least 11 phr of a resin (B).

Preferably, the composition comprises one quantity Y of less than 40 phr or 30 phr or 25 phr or 20 phr or 15 phr of at least one resin (B).

Preferably, the composition comprises one quantity Y of 11 to 40 phr or from 11 to 30 phr or from 11 to 25 phr or from 11 to 20 phr or from 11 to 15 phr of at least one resin (B).

Preferably, the composition comprises one quantity Y of only one resin (B), the quantity of which is according to the above preferred quantities.

Preferably, the composition comprises one quantity Y of two or more resins (B), the added quantities of which are according to the preferred quantities above. The term "resin" is used to mean a polymer having thermoplastic or at least partially thermoplastic characteristics (as in the case of elastomeric/thermoplastic block copolymers).

Thermoplastic characteristics is used to indicate the tendency of the polymer to increase its viscosity, that is, to deform plastically when subjected to a temperature increase and/or to a sufficiently strong deformation. These characteristics of thermoplasticity differentiate the behaviour of a resin from that of an elastomer, as defined hereinafter. Moreover, a resin is not derived from the polymerisation of conjugated dienes, unlike the liquid polymer (A) and the diene elastomer (D) as defined herein.

The resin (B) of the present composition is a non-cross-linkable polymer (non-reactive resin). Preferably, the resin (B) is characterised by one or more of the following parameters:
- a weight average molecular weight (*M̅w*) of between 200 and 3000 g/mol, and/or
- a glass transition temperature (Tg) higher than 0 °C.

The weight average molecular weight (*M̅w*) may be measured according to known techniques in the field such as, for example, by SEC (Size-Exclusion Chromatography) according to the ASTM D6579-11 method "Standard Practice for Molecular Weight Averages and Molecular Weight Distribution of Hydrocarbon, Rosin and Terpene Resins by Size-Exclusion Chromatography".

The glass transition temperature (Tg) and the softening temperature (Tm) can conveniently be measured using a differential scanning calorimeter (DSC) according to methods well known to the man skilled in the art, such as the ASTM D 6604 method (Glass Transition Temperatures of Hydrocarbon resins by Differential Scanning Calorimetry).

Preferably, the resin (B) is characterised by a weight average molecular weight (*M̅w*) of between 500 and 3000 g/mol, preferably between 500 and 2000 g/mol.

Preferably, the resin (B) is characterised by a glass transition temperature (Tg) higher than 25 °C.

Preferably, the solid resin (B) has a softening temperature (Tm) higher than 25 °C, more preferably a softening temperature comprised of between 50 and 160 °C or between 80 °C and 140 °C.

Preferably, the liquid resin (B) can be liquid with a softening temperature lower than 25 °C, preferably lower than 0 °C or -10 °C or -25 °C.

The resin (B) used in the composition is preferably selected from the group comprising hydrocarbon resins, phenolic resins, natural resins and mixtures thereof.

Preferably, the resin (B) is a hydrocarbon resin.

Preferably, the resin (B) is a mixture of a natural resin and a hydrocarbon resin.

The hydrocarbon resin (B) may be aliphatic, aromatic or combinations thereof, meaning that the base polymer of the resin can consist of aliphatic and/or aromatic monomers.

The hydrocarbon resin (B) may be natural (e.g. vegetable) or synthetic or derived from petroleum. In some cases, non-limiting for the invention, these resins essentially contain only hydrogen and carbon atoms.

Preferably, the hydrocarbon resin (B) has a weight average molecular weight of between 500 and 3000 g/mol, preferably between 700 and 1500 g/mol.

Preferably, the hydrocarbon resin (B) is selected from homo- or copolymers of cyclopentadiene (CPD), dicyclopentadiene (DCPD), homo- or copolymers of terpene, homo- or copolymers of the C5 fraction and mixtures thereof, preferably DCPD/vinyl aromatic copolymers, DCPD/terpene copolymers, DCPD/C5 fraction copolymers, terpene/vinyl aromatic copolymers, C5 fractions/vinyl aromatic copolymers and combinations thereof.

Examples of vinyl aromatic monomers include styrene, alpha-methylstyrene, ortho-, meta-, para-methylstyrene, vinyl-toluene, para-tert-butylstyrene, methoxy-styrenes, chloro-styrenes, vinyl mesitylene, divinyl-benzenes, vinyl-naphthalenes, vinyl aromatic monomers derived from C8-C10 fraction, in particular from C9.

Preferably, the hydrocarbon resin (B) is selected from resins derived from coumarone-indene, styrene-indene, styrene-alkylstyrene, and aliphatic resins.

Specific examples of commercially available hydrocarbon resins (B) are NOVARES C resins, manufactured by RUTGERS CHEMICAL GmbH (indene-coumarone synthetic resins) NOVARES C10, C30 and C90 being particularly preferred.

Examples of commercially available styrene-indene hydrocarbon resins (B) are UNILENE At 100, manufactured by Braskem, and Novares TL 90, manufactured by Ruetgers.

Examples of commercially available alkyl-styrene hydrocarbon resins (B) are: Sylvares SA 85, manufactured by Arzona Chemical, Kristalex F 85, manufactured by Eastman.

Examples of commercially available aliphatic hydrocarbon resins (B) are: Escorez® 1102 (manufactured by ExxonMobil), Piccotac 1100 (manufactured by Eastman), Quintone A 100 (manufactured by Zeon Chemicals).

Preferably, the resin (B) is a phenolic resin.

Preferably, the phenolic resin (B) is selected from among the resins alkylphenol-formaldehyde based, alkylphenolic resins modified with rosin, resins alkylphenol-acetylene based, modified alkylphenolic resins and resins terpene-phenol based.

Examples of commercially available phenolic resins (B) that can be used in the present invention are: RESINA SP-1068 (manufactured by SI GROUP Inc.) (octylphenol-formaldehyde resin); DUREZ 32333 (manufactured by Sumitomo Bakelite) (phenol-formaldehyde resin); KORESIN (manufactured by BASF Company) (pt-butylphenol-acetylene resin); SYLVARES TP 115 (manufactured by Arizona Chemicals) (terpen-phenolic resin).

Preferably, the resin (B) is a natural resin based on terpene.

Preferably, the resin (B) is a polyterpene resin selected from the homo- or copolymers of alpha-pinene, beta-pinene, limonene, and vinyl aromatic monomers (styrene) and/or aromatic monomers (phenol).

Preferably, the resin (B) is a polyterpene resin having a glass transition temperature (Tg) higher than 25 °C.

Preferably, the resin (B) is a polyterpene resin having a softening temperature (Tm) of between 50 °C and 150 °C.

Preferably, the resin (B) is a polyterpene resin having a weight average molecular weight of between 500 and 3000 g/mol.

Examples of commercially available natural terpene-based resins that can be used in the present invention are: Piccolyte F90 and Piccolyte F105, manufactured by PINOVA; Dercolyte A 115 and Dercolyte M 115, manufactured by DRT.

Preferably, the resin (B) is a natural resin based on rosin.

The term rosin commonly indicates mixtures of isomer organic acids (rosin acids), characterised by a common structure, comprising three C6 fused rings, double bonds in different number and positions and a single carboxylic group.

Examples of rosin-based resins are marketed by DRT under the trade name HYDROGRAL G and DERTOLINE P 105.

The vulcanisable elastomeric composition for winter tyres according to the present invention may further comprises at least one plasticising oil (C).

Preferably, the composition comprises one quantity Z of at least 1 phr or 5 phr or 10 phr of at least one plasticising oil (C).

Preferably, the composition comprises one quantity Z of less than 70 phr or 60 phr or 50 phr of at least one plasticising oil (C).

Preferably, the composition comprises one quantity Z of from 0 to 70 phr or from 0 to 60 or from 0 phr to 50 phr or from 5 to 70 phr or from 10 to 60 phr or from 15 to 50 phr of at least one plasticising oil (C).

Preferably, the composition comprises only one plasticising oil (C), the total quantity Z of which is according to the preferred quantities above.

Preferably, the composition comprises two or more plasticising oils (C), the total added quantities Z of which are according to the preferred quantities above.

The plasticising oil (C) may be, in full or in part, from commercial compositions of the solid diene elastomeric polymer (D), where it acts as a thinner (extender).

The term "plasticising oil" means a process oil derived from petroleum or a mineral oil or a vegetable oil or a synthetic oil or combinations thereof.

The plasticising oil (C) is not derived from the polymerisation of conjugated dienes, unlike the liquid polymer (A) and the diene elastomer (D) as defined herein.

Preferably, the plasticising oil (C) exhibits one or more of the following features:
- a weight average molecular weight (*M̅w*) not higher than 600 g/mol or, if the class of the RAE, a weight average molecular weight of between 400 and 10000 g/mol, and/or
- a glass transition temperature (Tg) lower than -30°C.

Preferably, the plasticising oil (C) is a process oil derived from petroleum selected from paraffins (saturated hydrocarbons), naphthenes, aromatic polycyclic and mixtures thereof.

Examples of suitable process oils derived from petroleum are aromatic, paraffinic, naphthenic oils such as MES (Mild Extract Solvated), DAE (Distillate Aromatic Extract), TDAE (Treated Distillate Aromatic Extract), TRAE (Treated Residual Aromatic Extract), RAE (Residual Aromatic Extract) known in the industry.

The term RAE means a complex mixture of mainly polycyclic aromatic hydrocarbons obtained by extracting the residue of distillation of crude oil with solvents (CAS No. 64742-10-5).

Preferably, the plasticising oil (C) is a process oil derived from petroleum with a low aromatic content, selected for example from TDAE, TRAE, MES, paraffinic or naphthenic oils.

Examples of suitable plasticising oils (C) are oils derived from petroleum: NYTEX 4700 marketed by Nynas, EXTENSOIL 1471 marketed by Repsol, VIVATEC 500 marketed by H&R; and vegetable oils: RADIA 6132 marketed by Oleon, Agripure AP 18 and Agripure AP 75 marketed by Cargill.

Preferably, the plasticising oil (C) is an oil of natural or synthetic origin derived from the esterification of glycerol with fatty acids, comprising glycerin triglycerides, diglycerides, monoglycerides or mixtures thereof.

Preferably, these oils have a glass transition temperature (Tg) lower than -70 °C.

Examples of suitable vegetable oils are sunflower, soybean, linseed, rapeseed, castor and cotton oil.

Preferably, the plasticising oil (C) is a synthetic oil selected from among the alkyl or aryl esters of phthalic acid or phosphoric acid. Preferably, these esters have a glass transition temperature (Tg) lower than -70 °C.

These oils may be used alone or as a mixture.

Preferably, the elastomeric compositions according to the invention comprise at least 20 phr, 30 phr of plasticising mixture, by plasticising mixture meaning the combination of liquid polymer (A), resin (B) and, if present, plasticising oil (C) components.

The quantity of plasticising mixture corresponds to the sum of quantities X, Y and, if present, Z as defined above.

Preferably, the compositions comprise no more than 110 phr, 100 phr, 90 phr, 80 phr of plasticising mixture.

Preferably, the compositions comprise 20 to 100 phr, 30 to 90 phr, 40 to 80 phr of plasticising mixture.

The three components A, B and, optionally, C of the plasticising mixture are not necessarily pre-mixed together to give a separate plasticising mixture but in the preparation they may be added to the composition individually, in any sequence or step of the preparation process, as detailed hereinafter, or may be associated in whole or in part with one or more of the other components, such as in the case of the plasticising oils (C) which are, at least in part, already incorporated into the commercial elastomeric materials as extenders.

The vulcanisable composition for winter tyres described above comprises 100 phr of a mixture (D) of solid diene elastomeric polymers, comprising
from 0 to 95 phr, preferably from 20 to 95 phr, of at least one styrene-butadiene polymer (SBR),
from 0 to 95 phr, preferably from 0 to 60 phr, of at least one polybutadiene polymer (BR), and
from 5 to 100 phr, preferably from 5 to 80 phr, of at least one polyisoprene polymer (IR).

By "solid elastomeric polymer or solid elastomer" it is meant a natural or synthetic polymer which at room temperature can be stretched repeatedly to at least twice its original length and which, after removal of the tensile load immediately returns with force to approximately its original length (definition according to ASTM, committee E8, Philadelphia 1976).

By "diene polymer" it is meant a polymer or copolymer derived from the polymerisation of one or more different monomers, among which at least one of them is a conjugated diene (conjugated diolefin). Preferably, the suitable solid diene elastomeric polymers have a weight average molecular weight ( *M̅w*) higher than 80000 g/mol.

Preferably, the solid diene elastomeric polymers suitable for the present composition are those commonly used in the field of sulphur-crosslinkable elastomeric materials, materials that are particularly suitable for producing tyres, that is to say, elastomeric polymers or copolymers with an unsaturated chain having a glass transition temperature (Tg) generally lower than 20 °C, preferably in the range of from 0 °C to -110 °C.

By at least one styrene-butadiene (SBR) solid elastomeric polymer it is meant a polymer or copolymer derived from the polymerisation in solution (S-SBR) or emulsion (E-SBR) or in gas phase of one or more diolefins conjugated with at least one monovinylarene monomer, and optionally polar comonomers. Preferably, the conjugated diolefins contain from 4 to 12, more preferably from 4 to 8 carbon atoms and are preferably selected from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene and isoprene are particularly preferred.

Preferably, monovinylarenes contain from 8 to 20, preferably from 8 to 12 carbon atoms and are preferably selected from styrene; 1-vinylnaphthalene; 2-vinylnaphthalene; alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, or mixtures thereof. Styrene is particularly preferred.

Preferably, the polar comonomers are selected from vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile or mixtures thereof.

Examples of SBR solid elastomeric polymers are styrene/1,3-butadiene (SBR), styrene/isoprene/1,3-butadiene, styrene/1,3-butadiene/acrylonitrile copolymers.

Examples of SBR solid elastomeric polymers are SBR Sprintan SLR 4630 (Trinseo), SSBR 2560 TDAE (Sibur), SOL R 72612 (Versalis).

By at least one polybutadiene (BR) solid elastomeric polymer it is meant a polymer derived from the polymerisation of 1,3-butadiene, optionally in the presence of other conjugated diolefins as described above in which
1,3-dibutadiene is present in a quantity of not less than 50% by weight with respect to the total weight of the monomers.

Examples of polybutadienes commonly used in the industry are polybutadiene with a high content of double 1,4-cis bonds, polybutadiene with a high content of vinyl units, metallocene polybutadiene, 1,3-butadiene/acrylonitrile copolymers.

Examples of BR polybutadienes are polybutadiene (Europrene Neocis® BR40) - (Versalis), SKD NHEODIMIO (Nizhnekamskneftechim Export), BUNA CB 29 MES (Lanxess).

By at least one polyisoprene (IR) polymer it is meant a polymer derived from the polymerisation of isoprene, optionally in the presence of other conjugated diolefins as described above, wherein the isoprene monomer is present in a quantity of not less than 50% by weight with respect to the total weight of the monomers.

Preferably, the polyisoprene (IR) polymer is a cis-1,4-polyisoprene (natural or synthetic), a 3,4-polyisoprene, an optionally halogenated isoprene/isobutene copolymer or mixtures thereof, more preferably a natural rubber (NR).

Examples of natural rubber (NR) are SIR 20, SIR 10, STR 20, SMR-2, 3 SKI - GROUP II (Sibur), SKI 3 - GROUP II (Nizhnekamskneftechim Export).

The vulcanisable elastomeric composition may possibly comprise at least one elastomeric polymer of one or more monoolefins with an olefinic comonomer or derivatives thereof (a'). The monoolefins can be selected from: ethylene and α-olefins generally containing from 3 to 12 carbon atoms, such as for example propylene, 1-butene, 1-pentene, 1-hexene, 1-octene or mixtures thereof. The following are preferred: copolymers selected from ethylene and an α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; or mixtures thereof.

The solid diene elastomeric polymers constituting mixture (D) may optionally be functionalised by reaction with suitable terminating agents or coupling agents (solid diene elastomeric polymers a'). In particular, the diene elastomeric polymers obtained by anionic polymerization in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

Preferably, the mixture (D) of solid diene elastomeric polymers comprises
from 40 to 90 phr of at least one styrene-butadiene polymer (SBR),
from 0 to 50 phr of at least one polybutadiene polymer (BR), and
from 10 to 60 phr of at least one polyisoprene polymer (IR), preferably a natural rubber (NR). Preferably, the mixture (D) of solid diene elastomeric polymers comprises
from 0 to 50 phr of at least one styrene-butadiene polymer (SBR),
from 30 to 80 phr of at least one polybutadiene polymer (BR), and
from 20 to 70 phr of at least one polyisoprene polymer (IR), preferably a natural rubber (NR).

The vulcanisable elastomeric composition for winter tyres according to the present invention comprises at least 1 phr of at least one reinforcing filler (E).

Preferably, the composition comprises at least 20 phr or 30 phr or 40 phr or 50 phr of at least one reinforcing filler (E).

Preferably, the composition comprises no more than 150 phr or 140 phr or 130 phr or 120 phr or 110 phr or 100 phr of at least one reinforcing filler (E).

Preferably, the composition comprises from 10 to 150 phr or from 30 to 120 phr or from 50 to 120 phr or from 70 to 110 phr or from 80 to 100 phr of at least one reinforcing filler (E).

Preferably, the reinforcing filler (E) is selected from carbon black, a white filler or mixtures thereof.

Preferably, said reinforcing filler (E) is a white filler selected from among hydroxides, oxides and hydrated oxides, salts and hydrated salts of metals, silicates fibres or mixtures thereof.

Preferably, said filler is silica-based.

The silica present in the precursor of the composition can interact during mixing with the silane coupling agent, added for the purpose of making the silica compatible and dispersible in the elastomeric polymer.

Preferably, said reinforcing filler (E) is carbon black.

Preferably, said carbon black reinforcing filler is present in the elastomeric composition in an amount ranging between 1 phr and 120 phr, preferably between about 40 phr and about 110 phr.

Preferably, the carbon black reinforcing filler is selected from those having a surface area not smaller than 20 m²/g, preferably larger than 50 m²/g (as determined by STSA - statistical thickness surface area according to ISO 18852:2005).

An example of carbon black is N234 marketed by Birla Group (India) or by Cabot Corporation.

Preferably, said reinforcing filler (E) comprises multiple fillers, preferably carbon black and silica.

Preferably, at least 60%, 70%, 80%, 90% of the overall reinforcing filler is silica.

The vulcanisable elastomeric composition for winter tyres described above comprises at least 0.05 phr of at least one vulcanising agent (F).

Preferably, the composition comprises at least 0.1 phr, 1 phr, 2 phr, 3 phr, 4 phr of at least one vulcanising agent (F).

Preferably, the composition comprises no more than 15 phr, 10 phr, 8 phr of at least one vulcanising agent (F).

Preferably, the composition comprises from 0.05 to 15 phr or from 0.1 to 10 phr or from 0.2 to 10 phr or from 1 to 10 phr or from 2 to 10 phr of at least one vulcanising agent (F)

Preferably, the vulcanising agent (F) is selected from among sulphur, and sulphur-containing molecules that act as sulphur donors.

Sulphur or derivatives thereof may advantageously be selected, for example, from:
(i) soluble sulphur (crystalline sulphur);
(ii) insoluble sulphur (polymeric sulphur);
(iii) sulphur dispersed in oil (for example 33% sulphur known by the trade name Crystex OT33 from Solutia);
(iv) (iv) sulphur donors such as, for example, caprolactam disulphide (CLD), bis[(trialcoxysilyl)propyl]polysulphides, dithiophosphates; or mixtures thereof.

The vulcanising agent (F) is preferably used together with adjuvants such as activators, vulcanisation accelerants and/or retardants known to the man skilled in the art.

Vulcanisation activators that are particularly effective are zinc compounds. In particular, ZnO, ZnCO₃, zinc salts of saturated or unsaturated fatty acids containing from 8 to 18 carbon atoms, are used. For example, zinc stearate is used, preferably formed in situ in the elastomeric composition, by ZnO and fatty acid, and also magnesium stearate, formed by MgO, or mixtures thereof.

Said vulcanisation activators are preferably used in the elastomeric composition in an amount of from about 0.5 phr to about 10 phr. More preferably, said vulcanisation activators are used in the elastomeric composition in an amount of from about 1 phr to 5 phr. Even more preferably, said vulcanisation activators are used in the elastomeric composition in an amount of from about 1.5 phr to 3.5 phr.

An example of activator is the product Aktiplast ST marketed by Rheinchemie.

Preferably, the elastomeric composition may further comprise at least one vulcanisation accelerant. Vulcanisation accelerants that are commonly used may be for example selected from dithiocarbamates, guanidines, thioureas, thiazoles, sulphenamides, sulphenimides, thiurams, amines, xanthates, or mixtures thereof.

An example of vulcanisation accelerant is the N-cyclohexyl-2-benzothiazyl-sulfenamide Vulkacit® CZ/C marketed by Lanxess.

Said vulcanisation accelerants are preferably used in the elastomeric composition in an amount of from about 0.05 phr to about 10 phr.

More preferably, said vulcanisation accelerants are used in the elastomeric composition in an amount of from about 0.1 phr to about 5 phr.

Even more preferably, said vulcanisation accelerants are used in the elastomeric composition in an amount of from about 0.5 phr to about 3 phr.

The present elastomeric composition optionally comprises one or more vulcanisation retardants such as, for example, N-cyclohexylthio phthalimide (VULKALENT G, - Lanxess).

Preferably, if present, said retardants are used in an amount of between 0.05 phr and 2 phr.

The vulcanisable elastomeric composition according to the invention may further comprise from 0.1 to 20 phr of a coupling agent (G).

Preferably, said coupling agent (G) is a silane coupling agent selected from those having at least one hydrolysable silane group which can be identified, for example, by the following general formula (I):

(R')₃Si-CₙH₂ₙ-X (I)

wherein the R' groups, equal or different from each other, are selected from: alkyl, alkoxy or aryloxy groups or from halogen atoms, provided that at least one of the R' groups is an alkoxy or an aryloxy group; n is an integer of between 1 and 6, ends included; X is a group selected from: nitrose, mercapto, amino, epoxide, vinyl, imide, chloro, -(S)mCnH2n-Si-(R')3 and -S-COR', wherein m and n are integers of between 1 and 6, end included and the R' groups are as defined above. Among the silane coupling agents, bis(3-triethoxysilylpropyl)tetrasulphide and bis(3-triethoxysilylpropyl)disulphide are particularly preferred. Said coupling agents may be used as such or as a suitable mixture with an inert filler (such as carbon black) so as to facilitate their incorporation into the elastomeric composition.

Preferably, said silane coupling agent is present in the elastomeric composition in an amount ranging between about 0.01 phr and about 10 phr, preferably between about 0.5 phr and about 7 phr.

An example of the silane coupling agent is TESPT: bis(3-triethoxysilylpropyl)tetrasulphide Si69 marketed by Evonik.

The elastomeric composition may comprise other commonly used additives, selected according to the specific application for which the composition is intended, for example anti-ageing agents, anti-reversion agents, adhesives, antiozonants, in particular of the p-phenylenediamine type, antioxidants, waxes, fibres (for example Kevlar® pulp), or mixtures thereof.

### Preparation of the composition

The vulcanisable elastomeric composition for winter tyres is obtainable according to a conventional mixing and dispersion process (P1), which comprises
- feeding at least one mixing apparatus, comprising at least one discontinuous mixer and/or at least one continuous mixer, with all the components of the composition:
- mixing and dispersing said components, to give said vulcanisable elastomeric composition; and
- unloading said vulcanisable elastomeric composition from said mixing apparatus.

Alternatively, the vulcanisable elastomeric composition for winter tyres is obtainable according to a process (P) which comprises at least one conventional mixing and dispersion step (P1) to give a first possibly vulcanisable elastomeric composition followed by at least one reworking step (P2), wherein the conventional mixing and dispersion step (P1) comprises
- feeding at least one mixing apparatus, comprising at least one discontinuous mixer and/or at least one continuous mixer, at least:
   one quantity X1 of the liquid polymer (A), wherein 0 ≤ X1 ≤ X,
   one quantity Y1 of the resin (B), wherein 0 ≤ Y1 ≤ Y,
   the solid diene elastomeric polymer (D),
   the reinforcing filler (E), and
   optionally the vulcanising agent (F);
- mixing and dispersing said components, to give said first possibly vulcanisable elastomeric composition;
- possibly unloading said first vulcanisable elastomeric composition from said mixing apparatus; and wherein the possible reworking step (P2) comprises
- feeding, to at least one continuous mixer, said first vulcanisable elastomeric composition and, possibly,
   one quantity X2 of the liquid polymer (A), wherein 0 ≤ X2 ≤ X,
   one quantity Y2 of the resin (B), wherein 0 ≤ Y2 ≤ Y,
   wherein X1 + X2 = X and Y1 + Y2 =Y,
- mixing said first vulcanisable elastomeric composition and dispersing therein the liquid polymer (A) and/or the resin (B) possibly fed in step (P2), by means of said at least one continuous mixer, preferably by applying, to said continuous mixer, a suction pressure (Pa) of less than about 150 mbar; and
- unloading said possibly vulcanisable elastomeric composition for winter tyre from said at least one continuous mixer.

Preferably, the vulcanisable elastomeric composition to winter tyres is obtained according to process (P).

Preferably, the liquid polymer (A) and/or the resin (B) are added in step P1, i.e. the quantity X1 of the liquid polymer (A) is equal to the total quantity X of liquid polymer (A) and/or the quantity Y1 of the resin (B) is equal to the total quantity Y of resin (B).

### DEFINITIONS

For the purpose of the present description and the following claims, the term "mixer or mixing device" means a device able to substantially mix the ingredients of a solid elastomeric composition, especially under cold-feeding conditions, and to chew the elastomeric material, thereby raising the temperature thereof in order to make it workable and plastic to facilitate the incorporation and/or distribution of the ingredients within the elastomeric matrix.

As better explained hereinafter, other devices commonly used in the working of elastomers, such as finite element making devices, such as single screw extruders; conveyor devices (conveyors), such as extruders/transporters (conveyors, Batch-off); open roller mixers, are not considered adequate for the purposes of the present invention due to their limited ability to incorporate and disperse the components. Particularly in the case of viscous solid elastomers incorporating large amounts of reinforcement materials, such are the present compounds for tyre components, such devices are generally not able to produce an effective mixing of the components.

In the present description, the term "discontinuous or batch mixer" means a mixing device adapted to be periodically fed with the elastomeric composition components in predefined amounts (batches) and mix them for a predetermined time so as to obtain the elastomeric composition. At the end of mixing, the resulting elastomeric composition is fully unloaded from the mixing device in a single solution. For the purpose of the present description and of the following claims, the term "continuous mixer" means a mixing device suitable for receiving the ingredients of an elastomeric composition as a continuous feeding, mixing and/or reworking them in order to produce and unload an elastomeric composition in a continuous stream (except for possible stops of the mixing device due to maintenance, or elastomeric composition recipe change) in contrast to the periodic loading/unloading of the batch mixing device. Generally, the continuous mixer is a closed system, with the exception of the parts for loading the components and unloading the composition.

The continuous mixer is able to substantially mix the basic ingredients of an elastomeric composition, especially under cold-feeding/dosing conditions, and to chew the elastomeric material, thereby raising the temperature thereof in order to make it workable and plastic to facilitate the incorporation and/or distribution of the ingredients within the polymeric matrix. The continuous mixer is able to effectively mix the composition even in a single transit of the material.

The continuous mixer is therefore mainly provided with mixing portions able to impart a high shear stress to the composition, and with any redistribution portions. The continuous mixer is further provided with transport portions capable of carrying the composition being worked from one longitudinal end to the other one of the inner chamber.

The continuous mixer as understood herein is therefore a device suitable for effectively mixing viscous elastomeric materials, such as compounds for tyre components, such as treads.

Surprisingly, the possible first reworking step (P2) of the first elastomeric composition in continuous mixer, preferably under high vacuum, imparts further unpredictable properties to the specific composition of the invention.

Examples of continuous mixing devices are continuous twin-screw or multi-screw (e.g. ring mixers), penetrating and co-rotating, or planetary mixing devices.

The term "high vacuum" means a suction pressure applied to the continuous mixer lower than 150 mbar, preferably lower than 100 mbar, more preferably lower than 50 mbar or 40 mbar.

The term 'planetary mixer' means a continuous mixing device having a central rotor and a plurality of satellites mixers, each of which, driven by the central rotor, rotates simultaneously about its own axis and about the central rotor.

Both the discontinuous mixer and the continuous mixer, although with different efficacy and effects, are able to impart sufficient energy to the elastomeric composition to mix and disperse the charge in the elastomeric polymer even in case of cold feeding, unlike other elastomeric composition handling devices, such as conveyor devices and devices for manufacturing a semi-finished product as set out hereinafter, which for the purposes of the present invention are not considered mixers.

For the purposes of the present description, the term 'conveyor device' ('conveyor') means a device that exerts a continuous transportation of the elastomeric composition through its length and imparts an appropriate shape to the output composition for subsequent handling or storage. Examples of conveyors are unloading devices ('batch-off) from batch mixing devices. Conveyor devices typically comprise elements that mainly favour the axial movement of the material, such as helical screws. For the purposes of the present description, the term 'device for manufacturing a semi-finished product or extruder' means a device that can be fed, for example continuously, with an elastomeric composition and can unload a continuous strip of said elastomeric composition, imparting predefined shape and dimensions thereto, such as desired shape and dimensions for the incorporation in the green winter tyre, such as a tread band.

In the present description, the term green is generally used to indicate a material, a composition, a component or a tyre not yet vulcanised.

Examples of devices for manufacturing a semi-finished product or extruders are single screw extruders having an extrusion head or calender in output.

It is understood from the foregoing that the conveyor devices and the devices for manufacturing a semi-finished product, while exerting a mild mixing action under certain conditions, are not able to provide the composition with sufficient energy to disperse the charges in the elastomeric polymer or to substantially mix the components of an elastomeric composition so as to form a composition starting from the basic ingredients thereof, especially under cold feeding conditions, being limited to transportation and/or conformation of the composition being fed. Also open roll mixing devices are not able to effectively mix the present elastomeric materials.

Such devices are typically used as sheeting elements to impart the shape of a strip or sheet to the compound mass unloaded from other mixing devices (such as internal mixers), which is more manageable in the subsequent steps.

Such devices are therefore not covered by the present definition of continuous mixers.

Preferably, the conventional mixing and dispersion step (P1) of the present process is carried out with a mixing apparatus comprising at least one discontinuous mixer selected from an internal mixer (closed) or an open mixer.

Generally, said discontinuous mixer includes a pair of tangential or penetrating rotors.

Generally, said discontinuous mixer includes a mixing chamber wherein a pair of rotors rotating in mutually opposite directions is accommodated, in such a way as to mix the components introduced in the mixing chamber from the top thereof.

To this end, the discontinuous mixer may be provided with a pneumatic or hydraulic cylinder positioned at the top of the mixing chamber and a piston that moves both upwards, to open the mixing chamber, thereby allowing the introduction of ingredients of the composition by specific loading hoppers, and downwards, so as to exert pressure on the material being worked in the mixing chamber and located above the pair of rotors.

A pneumatic or hydraulic system positioned on the bottom of the mixing chamber enables the unloading of the elastomeric composition at the end of the mixing cycle through the opening of a dedicated inlet.

Specific examples of discontinuous mixers that can be advantageously used according to the present invention are of the closed (Banbury®, Intermix®) or open (open mill or Z-blade) type.

In general, the conventional mixing and dispersion step (P1) comprises one or more non-productive steps in which all components except those able to promote the crosslinking (such as sulphur and accelerants) are fed to the batch mixing device, and a production step in which the elastomeric composition obtained from the first step, as well as the components able to promote the crosslinking, are fed to the batch mixing device, so as to provide the first vulcanisable elastomeric composition described above.

Preferably, said conventional mixing and dispersion step (P1) is carried out using one or more discontinuous mixers.

The mixing and dispersion step (P1) can be carried out using a single discontinuous mixer or one or more different or equal mixers.

Said mixing step may be carried out in a single or multiple mixing sub-steps carried out in the same discontinuous mixer or in different mixers, preferably in two or three subsequent mixing sub-steps in the same single discontinuous mixer or in different mixers.

In the case of a single mixing step (P1), all the components of the first elastomeric composition are added together and mixed at temperatures of the material being worked lower than 110 °C to give a first vulcanisable elastomeric composition, then possibly fed to the continuous mixer, possibly together with the remaining part of the liquid polymer (A) and/or of the resin (B) and/or of any oil (C), and reworked (step P2), preferably under high vacuum.

Alternatively, if the mixing process (P1) comprises two sub-steps, the solid diene elastomeric polymer (D), the reinforcing filler (E) are fed and mixed in the discontinuous mixer, preferably at temperatures of the material being worked of between 130 °C and 150 °C. The mixture unloaded from the discontinuous mixer is fed back to the same discontinuous mixer or to a different mixer, possibly along with the vulcanising agent (F) and preferably at least part of the liquid polymer (A) and/or of the resin (B) and/or of any oil (C), the coupling agent (G) and any activating agents, accelerants and/or retardants for the vulcanisation and additives and mixed at temperatures of the material being worked lower than 110 °C, preferably of between 90 °C and 110 °C.

Alternatively, if the mixing process P1 includes three mixing sub-steps, the diene elastomeric polymer (D) and the reinforcing filler (E) and preferably at least part of the liquid polymer (A) and/or of the resin (B) and/or of any oil (C), the coupling agent (G), are first fed and mixed in the discontinuos mixer, preferably at temperatures of the material to be worked of between 130 °C and 150 °C.

The mixture unloaded from the discontinuous mixer is fed back to the same discontinuous mixer or to a different mixer along with any other additives (antioxidants, anti-ozonants, zinc oxide, etc.) and mixed at temperatures of the material being worked of between 100 °C and 130 °C.

The mixture unloaded from the discontinuous mixer is fed back to the same discontinuous mixer or to a different mixer, possibly along with the vulcanising agent (F) and any activating agents, accelerants and/or retardants for the vulcanisation, and mixed at temperatures of the material being worked lower than 110 °C, preferably of between 90 °C and 110 °C.

The mixture unloaded from the discontinuous mixer can be finally possibly fed directly to the continuous mixer, possibly together with the remaining part of the liquid polymer resin (A) and/or the resin (B) and/or any oil (C), and reworked (step P2).

Preferably, the mixing in said first and/or second and/or third discontinuous mixing device is carried out at a rotor speed higher than about 10 revolutions per minute (rpm) and/or lower than about 80 rpm, more preferably between about 30 and about 70 rpm.

Preferably, the mixing in said first and/or second and/or third discontinuous mixing device is carried at a rotor speed of between 10 rpm and 60 rpm, preferably between 20 rpm and 50 rpm in the case of a closed mixer; at a rotor speed of between 10 rpm and 40 rpm, preferably between 10 rpm and 30 rpm in the case of an open mixer.

Preferably, the mixing in said first and/or second and/or third discontinuous mixing device is carried out with a filling factor of the mixing chamber (the filling factor is the total free volume fraction of the mixing chamber occupied by the material to be mixed) not higher than about 80%, preferably from about 55% to about 70%. If a too high filling factor is selected, the lack of free volume prevents the movement and remixing of the material and proper mixing becomes impossible. Likewise, if a very small filling factor is selected, it is difficult to ensure adequate mixing, with high shear forces and adequate homogenisation of material into the mixing chamber.

Preferably, the mixing in said first and/or second and/or third discontinuous mixing device is carried out for, each sub-step, for a time of between 50 and 600 seconds, more preferably between 100 and 400 seconds.

Alternatively, at least one mixing and dispersion step (P1) can be carried out with a continuous mixer. Preferably, the mixing in said first and/or second and/or third discontinuous mixing device or in said at least one continuous mixing device is carried out at ambient pressure.

Preferably, the mixing in said first and/or second and/or third discontinuous mixing device - if sealed - or in said at least one continuous mixing device is carried out at a pressure in the mixing chamber lower the ambient pressure, preferably comprised between the ambient pressure (1000 mbar) and 900 mbar.

Preferably, the conventional mixing and dispersion step (P1) is carried out in two or three subsequent mixing sub-steps in a single mixer, after unloading, cooling and feeding of the intermediate compositions.

Preferably, the conventional mixing and dispersion step (P1) is carried out in two or three subsequent mixing sub-steps in two or three continuous and/or discontinuous mixers.

Preferably, the conventional mixing and dispersion step (P1) is carried out in three subsequent mixing sub-steps in in one or more discontinuous mixers, preferably internal mixers with tangential screws (Banbury® type) or penetrating screws (Intermix® type).

A first possibly vulcanisable elastomeric composition is obtained at the end of the conventional mixing and dispersion step (P1).

By the expression "first vulcanisable elastomeric composition" it is meant a composition comprising at least the solid diene elastomeric polymer (D), the reinforcing filler (E) and the essential components for vulcanisation, i.e. the vulcanising agent (F) and preferably adjuvants and/or retardants for the vulcanisation, which make it substantially already vulcanisable.

Such first vulcanisable elastomeric composition, if not reworked in step (P2), will further comprise, at least in part, the liquid polymer (A) and/or the resin (B), any oil (C), and any other components such as the coupling agent (G), or other additives.

Preferably, the first vulcanisable elastomeric composition comprises all the components of the final vulcanisable elastomeric composition. In that case, the possible step (P2) in continuous mixer, preferably under high vacuum, will be a reworking step only.

Alternatively, the first vulcanisable elastomeric composition does not comprise all the components of the final composition, the liquid polymer resin (A) and/or the resin (B) and/or any oil (C) being able to be added, in whole or in part, during the possible step (P2).

Preferably, the mixing and dispersion step (P1) further comprises cooling said first elastomeric composition to a temperatures of from 15 °C to 40 °C, more preferably from 20 °C to 30 °C, before feeding it to said continuous mixing device for the possible reworking step (P2).

Advantageously, cooling said first elastomeric composition allows preventing scorching of the composition itself during the possible subsequent reworking (P2).

Preferably, the first possibly vulcanisable elastomeric composition obtained in the conventional step (P1) is then fed to at least one continuous mixer for the possible reworking step (P2).

Specific examples of continuous mixers that can be advantageously used for the possible reworking step (P2) are of the twin screw or multiple screws type, co-rotating, interpenetrating, self-cleaning or of the planetary roll mixer type.

Typically said screws, in the case of multi-screw or satellite or twin-screw continuous mixer, or in the case of planetary continuous mixer, comprise chewing compression and/or cutting elements and transport elements. Moreover, the screws or satellites may comprise one or more toothed or geared elements; flow limiters; flow control devices. Preferably, said continuous mixing device is of multi-screw type (i.e. comprising more than two screws), such as for example ring mixers having at least four screws, typically ten or twelve, arranged regularly spaced apart on a circle.

Preferably, said continuous mixing device is of self-cleaning type, i.e. the mixing elements of each screw are substantially completely penetrating into the mixing elements of the adjacent rotating screw, thereby allowing the self-cleaning of the device.

Preferably, the reworking step (P2) in said continuous mixing device is carried out by applying a specific energy of at least 0.1 kWh/kg, more preferably at least 0.2 kWh/kg and/or no higher than 0.6 kWh/kg, more preferably no higher than 0.4 kWh/kg.

Preferably, the possible reworking step (P2) in said continuous mixing device is carried out at a speed of rotation of the screws, in the case of multi-screw or twin-screw device, or of the central rotor, in the case of planetary mixer, from about 60 to about 300 rpm, more preferably between 80 and 105 rpm. In a preferred embodiment, the L/D ratio (length/diameter of the screw) is of between 16 and 64, preferably between 24 and 48.

According to a particular embodiment, the first vulcanisable elastomeric composition obtained in the conventional step (P1) is fed to a conveyor device before being fed to the continuous mixing device for the possible reworking of step (P2). Feeding to said conveyor can allow controlling the feeding rate of the first elastomeric composition towards said continuous mixing device.

Preferably, said conveyor is of the helical single-screw or counter-rotating helical twin-screw type. Preferably, the speed of said screw or said screws of the conveyor device is of between 10 rpm and 60 rpm, more preferably between 20 rpm and 35 rpm.

Preferably, the possible reworking step (P2) in said continuous mixing device is carried out at said a suction pressure Pa lower than 100 mbar, more preferably lower than 50 mbar or 40 mbar.

According to the Applicant, the suction may extract any solvents and/or cooling water and/or substances generated during mixing (reactive mixing) and/or additives that improve the workability of the composition precursor but that are undesired in the finished product. For example, in the case of compositions for the production of treads provided with reinforcing fillers based on silica and a silane coupling agent, the suction extracts the ethanol produced by the silica-silane interaction.

Preferably, the possible reworking step (P2) in said continuous mixing device is carried out at a temperature of the material being worked lower than 120 °C, preferably between 90 °C and 110 °C.

Preferably, the possible reworking step (P2) in said continuous mixing device is carried out with an average filling degree of said mixer of between 10% and 50%.

"Average filling degree" means the average ratio of the volume occupied by the elastomeric material in the mixing chamber, delimited by the mixing screws and by the inner walls of the seat of such screws into the mixer, to the total volume of such a chamber. The average filling degree is indicative of the ability of the continuous mixer to treat the amount of material that it receives in input.

Preferably, the possible reworking step (P2) in said continuous mixing device has a productivity of between 700 and 4000 Kg/h.

Preferably, a further mixing may be carried out downstream of the possible reworking step (P2), using a discontinuos mixer, such as a Banbury. If after step P2, the further mixing step is carried out in a discontinuous mixer, the essential ingredients for vulcanisation, i.e. the vulcanising agent (F) and preferably adjuvants and/or retardants for the vulcanisation can advantageously be introduced in such a further production step of the final elastomeric composition.

Preferably, the final elastomeric composition at the end of the mixing steps is extruded in the form of sheet or tape.

The final elastomeric composition is then unloaded, preferably using a conveyor device, and typically unloaded from the conveyor in the form of a sheet, pumping it through an extrusion nozzle or a roller nozzle. The resulting sheet is usually subjected to a cooling treatment, generally by using water and/or forced air. The sheet thus treated is then usually placed on benches or coils awaiting further working. Typically, the final elastomeric composition can be fed to a device for manufacturing a semi-finished product, such as a single screw short cylinder extruder with hot feeding, so as to obtain the tyre component, preferably the tread band.

A second aspect of the present invention consists of a component for winter tyres comprising an elastomeric composition obtained by using the vulcanisable elastomeric composition according to the invention.

Preferably, said component is not the innermost layer (liner).

Preferably, said component is a tread band.

Preferably, said component is a vulcanisable tread band comprising at least 50%, preferably at least 70% or 90% or 95% or 100% of a vulcanisable elastomeric composition according to the invention. A third aspect of the present invention consists of a winter tyre for vehicles comprising a component, preferably a tread band, comprising a vulcanised elastomeric composition obtained by vulcanisation of a vulcanisable elastomeric composition according to the invention.

Preferably, in the tyre of the present invention, the component comprising the vulcanised elastomeric composition obtained by vulcanising a vulcanisable elastomeric composition according to the invention is not the innermost layer (liner).

The winter tyre according to the invention comprises
- one carcass structure comprising at least one carcass layer having opposite lateral edges associated with respective bead structures including at least one anchoring annular element and at least one bead filler;
- one belt structure comprising at least one belt layer applied in radially outer position with respect to the carcass structure;
- one tread band applied in radially outer position with respect to said belt structure;
   wherein said tread band comprises a vulcanisable elastomeric composition obtained by vulcanising the vulcanisable elastomeric composition according to the invention.

The tyre according to the invention is a winter or snow tyre.

Preferably, the winter tyre according to the invention is a winter tyre for high or very high performance (HP, UHP, SUV) vehicles.

Preferably, the winter tyre according to the invention is a winter tyre for automobiles.

The tyre according to the invention may be a tyre for heavy vehicles or motorcycles.

The winter tyre according to the invention can be manufactured according to a process comprising:
a) producing a green winter tyre comprising a tread band applied to a radially outer position of the tyre;
b) subjecting said green winter tyre to moulding and vulcanisation in order to obtain a finished tyre,
   - wherein said green tread band comprises the vulcanisable elastomeric composition described above.

The Applicant has found that due to the features of the elastomeric composition, a winter tyre can be made with high productivity which achieves an improvement in the driving performance on snow while maintaining a satisfactory behaviour on dry and wet, with an optimum balance of properties known to be conflictual.

### BRIEF DESCRIPTION OF THE DRAWINGS

With reference to the accompanying figures:
- Figure 1 schematically shows a semi-sectional view of a winter tyre for vehicle wheels obtained according to the present invention;
- Figure 2 shows a diagram of an exemplary plant for producing an elastomeric composition as described above;
- Figure 3 shows a diagram of another exemplary plant for producing an elastomeric composition as described above;
- Figure 4 shows a diagram of another exemplary plant for producing an elastomeric composition as described above;
- Figure 5 shows a schematic lateral view of a continuous mixer of the plant in figures 2, 3 and 4;
- Figure 6 shows a schematic front and sectional view of the continuous mixer in figure 5.

### DESCRIPTION OF EXAMPLARY EMBODIMENTS OF THE INVENTION

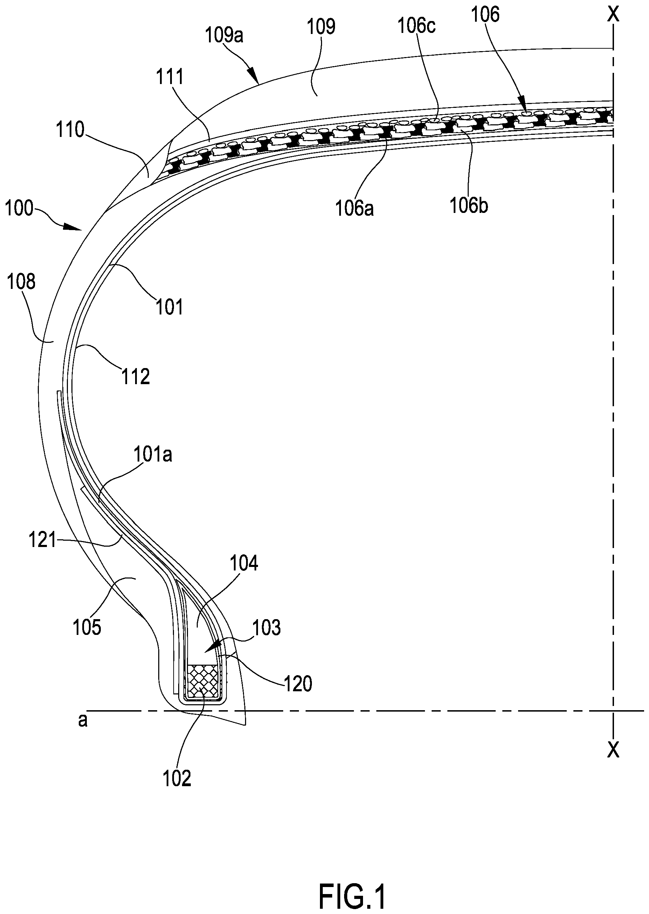

Figure 1 shows an exemplary winter tyre manufactured by the process according to the present invention.

With reference to figure 1, "a" denotes an axial direction and "x-x" trace of an equatorial plane of the tyre, indicates a radial direction. For simplicity, figure 1 shows only a portion of the tyre, the remaining portion not shown being identical and arranged symmetrically with respect to the radial direction "r". Reference numeral (100) in figure 1 denotes a winter tyre for vehicle wheels produced according to the process according to the invention and formed by a plurality of structural elements.

The winter tyre (100) for four-wheeled vehicles comprises at least one carcass structure, comprising at least one carcass layer (101) having respectively opposite end flaps engaged with respective annular anchoring structures (102), referred to as bead cores, possibly associated to a bead filler (104). The tyre area comprising the bead core (102) and the filler (104) forms a reinforcement annular structure (103), the so-called bead, intended for anchoring the tyre onto a corresponding mounting rim, not shown.

The carcass structure is usually of radial type, i.e. the reinforcement elements of the at least one carcass layer (101) lie on planes comprising the rotational axis of the tyre and substantially perpendicular to the equatorial plane of the tyre. Said reinforcement elements may consist of textile cords, such as rayon, nylon, polyester [for example polyethylene naphthalate (PEN) or metal cords]. Each reinforcement annular structure is associated to the carcass structure by folding back of the opposite lateral edges of the at least one carcass layer (101) around the annular anchoring structure (102) so as to form the so-called carcass flaps (101a) as shown in Figure 1.

In one embodiment, the coupling between the carcass structure and the reinforcement annular structure can be provided by a second carcass layer (not shown in Figure 1) applied in an axially outer position with respect to the first carcass layer.

An anti-abrasive strip (105) is arranged in an outer position of each reinforcement annular structure (103). Preferably, each anti-abrasive strip (105) is arranged at least in an axially outer position to the reinforcement annular structure (103) extending at least between the sidewall (108) and the portion radially below the reinforcement annular structure (103).

Preferably, the anti-abrasive strip (105) is arranged so as to enclose the reinforcement annular structure (103) along the axially inner and outer and radially lower areas of the reinforcement annular structure (103) so as to interpose between the latter and the wheel rim when the winter tyre (100) is mounted to the rim.

The carcass structure is associated to a belt structure (106) comprising one or more belt layers (106a), (106b) placed in radial superposition with respect to one another and with respect to the carcass layer, having typically metallic reinforcement cords. Such reinforcement cords may have crossed orientation with respect to a direction of circumferential development of the tyre (100). By "circumferential" direction it is meant a direction generally facing in the direction of rotation of the tyre.

At least one zero-degree reinforcement layer (106c), commonly known as a "0° belt", may be applied in a radially outermost position to the belt layers (106a), (106b), which generally incorporates a plurality of reinforcement cords, typically textile cords, textile or metallic optionally combined with one another, oriented in a substantially circumferential direction, thus forming an angle of a few degrees (such as an angle of between about 0° and 6°) with respect to the equatorial plane of the tyre, and coated with an elastomeric material.

A tread band is applied in position radially outer to the belt structure (106) comprising a vulcanised elastomeric composition obtained by vulcanisation of the vulcanisable elastomeric composition according to the invention.

Moreover, respective sidewalls (108) of elastomeric material are further applied in an axially outer position on the lateral surfaces of the carcass structure, each extending from one of the lateral edges of the tread (109) at the respective reinforcement annular structure (103).

In a radially outer position, the tread band (109), the composition of which is produced by the process described above, has a rolling surface (109a) intended to come into contact with the ground. In the case of tyres for use on dry track, the rolling surface is smooth as shown in figure 1. For conventional road tyres or for use on a wet or rain track, circumferential and/or transverse grooves and indentations are typically made (not shown in Figure 1).

An under-layer (111) is arranged between the belt structure (106) and the tread band (109).

A strip consisting of elastomeric material (110), commonly known as "mini-sidewall", can optionally be provided in the connecting zone between the sidewalls (108) and the tread band (109), this mini-sidewall being generally obtained by co-extrusion with the tread band (109) and allowing an improvement of the mechanical interaction between the tread band (109) and the sidewalls (108). Preferably, the end portion of the sidewall (108) directly covers the lateral edge of the tread band (109). Typically, a rubber layer (112), generally known as "liner", which provides the necessary impermeability to the inflation air of the tyre, can also be provided in a radially inner position with respect to the carcass layer (101).

The reinforcement annular structure (103) of the tyre may comprise a further protective layer which is generally known by the term of "chafer" (121) or protective strip and which has the function of increasing the rigidity and integrity of the bead structure (103).

Chafer 121 usually comprises a plurality of cords incorporated in a cross-linked elastomeric material and which are generally made of textile materials (such as aramid or rayon) or of metallic materials (such as steel cords).

The rigidity of the tyre sidewall 108 can be improved by providing the reinforcement annular structure (103) with a reinforcement layer (120) generally known as "flipper" or additional strip-like insert.

The flipper (120) is a reinforcement layer which is wound around the respective anchoring annular structure (102) and the bead filler 104 so as to at least partially surround them, said reinforcement layer being arranged between the at least one carcass layer 101 and the reinforcement annular structure 103. Usually, the flipper is in contact with said at least one carcass layer 101 and said reinforcement annular structure 103.

Flipper 120 typically comprises a plurality of metallic or textile cords incorporated within a cross-linked elastomeric material.

The building of the winter tyre (100) as described above, can be carried out by assembling respective semi-finished products adapted to form the components of the tyre, on a forming drum, not shown, by at least one assembling device.

At least a part of the components intended to form the carcass structure of the tyre can be built and/or assembled on the forming drum. More particularly, the forming drum is intended to first receive the possible liner, and then the carcass structure. Thereafter, devices non shown coaxially engage one of the annular anchoring structures around each of the end flaps, position an outer sleeve comprising the belt structure and the tread band in a coaxially centred position around the cylindrical carcass sleeve and shape the carcass sleeve according to a toroidal configuration through a radial expansion of the carcass structure, so as to cause the application thereof against a radially inner surface of the outer sleeve.

After the building of the green winter tyre, a moulding and vulcanisation treatment is generally carried out in order to determine the structural stabilisation of the tyre through cross-linking of the elastomeric compositions, as well as to impart a desired tread pattern on the tread band and to impart any distinguishing graphic signs at the sidewalls.

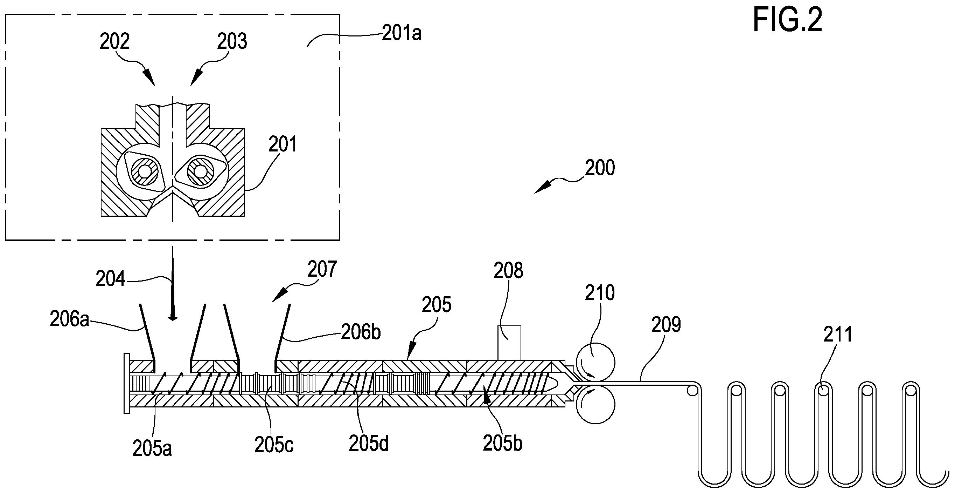

With reference to figure 2, a plant (200) for manufacturing the present elastomeric composition for winter tyre includes a mixing apparatus (201a) comprising at least one discontinuous mixer (201) (such as a Banbury®) where the mixing and dispersion step (P1), including one or more sub-steps, is carried out.

The components of the elastomeric composition (202) (203) are fed to the discontinuous mixer (201), all together from the beginning or separately during multiple subsequent mixing, in whole or in part - in the case of the liquid polymer (A) and/or the resin (B) and/or of any oil (C) - as described above. The above subsequent mixing steps are carried out in the discontinuous mixer (201).

Preferably, the optional components not mentioned above - such as coupling agents, accelerants, retardants and various additives - are added in the conventional mixing and dispersion step (P1). Alternatively, said mixing steps may be carried out in succession in the first discontinuous mixer (201) and in a second discontinuous mixer (not shown in figure 2).

According to a preferred embodiment, said mixing apparatus (201a) comprising at least one discontinuous mixer (201), preferably an internal mixer, further comprises at least one open mixer (not shown in figure 2) preferably being located downstream of said internal mixer (201).

After having mixed and dispersed the components of the first vulcanisable elastomeric composition (204), this is unloaded from the mixing apparatus (201a) and possibly fed to a continuous mixer (205) (such as a twin-screw co-rotating extruder) through a feeding power (206a) (the possible reworking step P2).

Preferably, said first vulcanisable elastomeric composition (204) can be obtained in the form of a product divided, for example by means of a grinding device not shown in figure 2). The first vulcanisable elastomeric composition (204) can possibly be fed directly, without being cooled, to the continuous mixer (205).

Preferably, said first elastomeric composition (204) can be cooled below 110-100 °C, preferably close to room temperature (such as at temperatures of between 20 °C and 40 °C), making it pass through a cooling device (not shown in figure 2) before being possibly fed to said continuous mixer (205). The continuous mixer (205) shown in figure 2 comprises a cylindrical chamber (205a) within which a pair of endless screws (205b) rotates (for example, two counter-rotating interpenetrating screws of which only one is visible in figure 2). Figure 2 shows the mixing and redistribution portions (205c) of the screw (205b) capable of imparting a high shearing force to the composition and the axial conveying portions (205d).

The liquid polymer (A) and/or the resin (B) and/or any oil (c) (207) can be fed together with said first vulcanisable elastomeric composition through the hopper (206a) or through a second feeding hopper (206b).

The continuous mixer (205) is provided with a suction unit (208) to allow the suction of fluids and gases that may develop during the mixing of the elastomeric composition, preferably under high vacuum. Preferably, multiple suction units can be present along the continuous mixer (205) (not shown in figure 2).

The suction units are connected with high vacuum pumps (not shown) which preferably apply a suction pressure of 150 mbar or less.

After having carried out the mixing, the tread composition (209) is discharged from the continuous mixer (205), for example in the form of a continuous strip, by pumping it through an extrusion roller die (210), for example by means of a gear pump (not shown in figure 2), and is subsequently cooled, preferably to room temperature, by passing it through a cooling device (211).

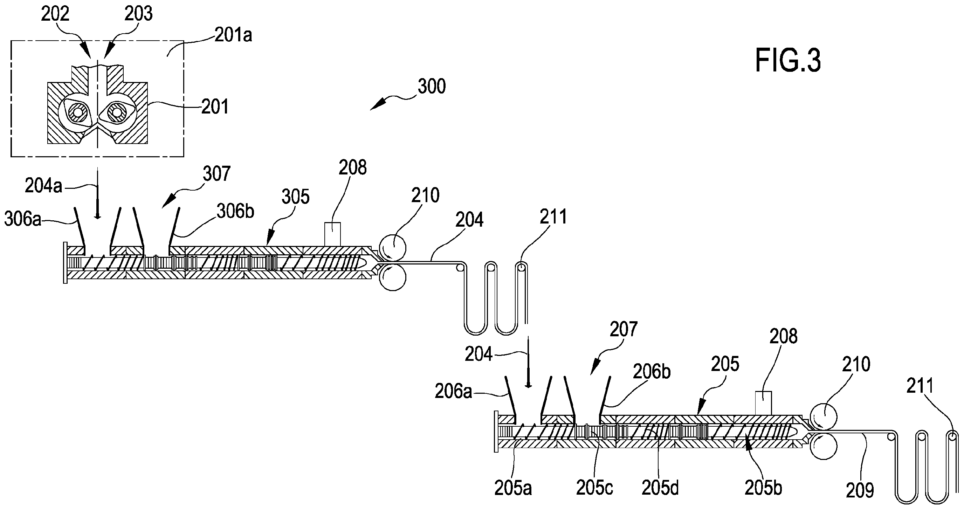

Figure 3 shows another plant (300) for the production of the present tread composition: identical reference numerals have the same meanings shown in figure 2.

It should be understood that all of the alternatives described above with reference to figure 2 also apply with reference to figure 3.

With reference to figure 3, the plant (300) for the production of a composition for tread according to the process of the present invention includes a mixing apparatus (201a) comprising a discontinuous mixer (201) as described above in figure 2 in which at least the elastomeric polymer (D), the reinforcing filler (E), the vulcanising agent (F) and, in full or in part, the liquid polymer (A) and/or the resin (B) and/or any oil (C) (202) are fed.

A first vulcanisable elastomeric composition (204a) is obtained, in this process embodiment, during the first mixing step and can be possibly fed to a first continuous mixer (305) (such as a twin-screw co-rotating extruder) through a feeding hopper (306a).

Preferably, said first vulcanisable elastomeric composition (204a) can be obtained in the form of a product divided as described above with reference to figure 2.

The first continuous mixer (305) in figure 3 shows a second feeding hopper (306b) for feeding the vulcanising agents (F) and/or the coupling agents (G), the activators and/or the accelerants and/or retardants (307).

Generally, the recipe ingredients are fed to different zones of the continuous mixer through one or more feeding hoppers (306b).

Preferably, each ingredient of the recipe is provided with a dedicated metering device (not shown in figure 3).

Preferably, a plurality of different ingredients of the recipe may be metered by means of the same metering device.

Preferably, the metering device is a gravimetric weight loss feeder.

After having carried out the second mixing, the first vulcanisable elastomeric composition (204) obtained is possibly fed to a second continuous mixer (205) through a feeding hopper (206a) as described for figure 2, for the possible reworking step (P2).

Preferably, said first vulcanisable elastomeric composition (204) can be obtained in the form of a product divided by pumping the same through an extrusion head (not shown in figure 3), said extrusion head being provided with a perforated extruder provided with knives, by means of a gear pump (not shown in figure 3), through which the first elastomeric composition is passed.

The resulting product in divided form may subsequently be cooled, preferably close to room temperature (such as between 20 °C and 40 °C), for example by conveying it to a cooling device (not shown in figure 3).

The passage of the first elastomeric composition from the first to the second continuous mixer can be made according to any known process.

The first vulcanisable granulated elastomeric composition is conveyed, for example by means of a conveyor belt, to a gravimetric weight loss feeder (not shown in figure 3) which doses and possibly feeds it to the second continuous mixer (205) through a feeding hopper (206a).

The second continuous mixer (205) in figure 3 shows a second feeding hopper (206b) for feeding possibly, in full or in part, the liquid polymer (A) and/or the resin (B) and/or any oil (C).

The continuous mixer (205) is provided with a suction unit (208) to allow the suction of fluids and gases that may develop during the mixing of the elastomeric composition, preferably under high vacuum. Preferably, multiple suction units can be present along the continuous mixer (205) (not shown in figure 2).

The suction units of the continuous mixer (205) are connected with high vacuum pumps (not shown) which preferably apply a suction pressure of 150 mbar or preferably less.

After having carried out the three mixing steps, the tread composition (209) is discharged from the second continuous mixer (205), for example in the form of a continuous strip, by pumping it through an extrusion roller die (210), for example by means of a gear pump (not shown in figure 3), and is subsequently cooled, preferably close to room temperature (such as between 20 °C and 40 °C), by passing it through a cooling device (211). Preferably, the continuous mixer (205) and/or (305) shown in figures 2 and 3 may be of the multi-screw ring or planetary roller type.

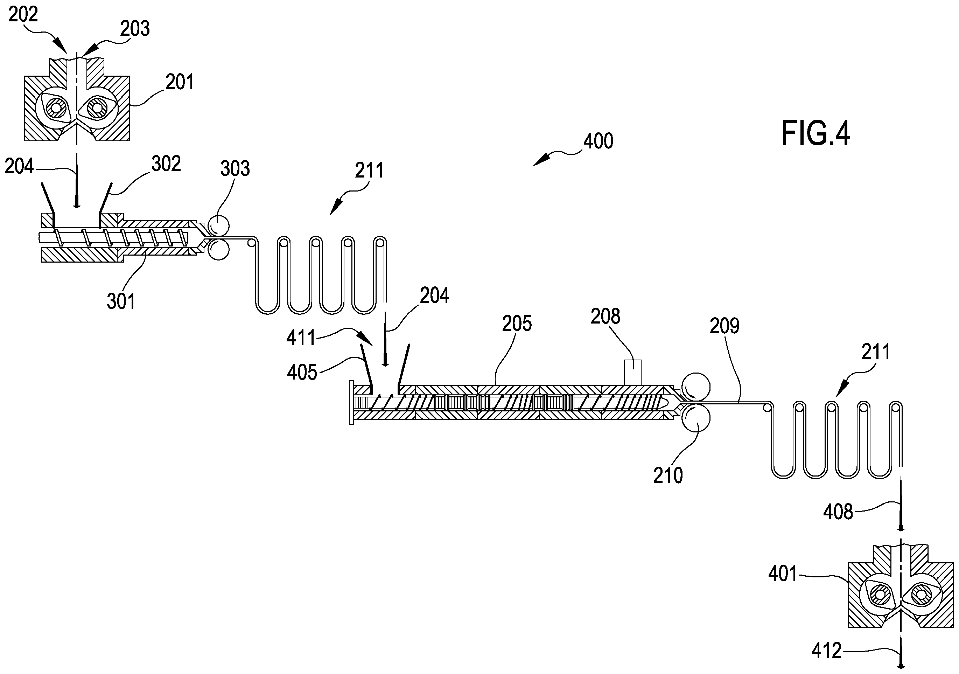

With reference to Figure 4, reference numeral (400) globally identifies another plant for the production of the present elastomeric composition. Same reference numerals have the same meanings shown in figures 2 and 3.

It should be understood that all of the alternatives described above with reference to figures 2 and 3 also apply with reference to figure 4.

The plant (400) for producing an elastomeric composition includes a discontinuous mixing device (201) (such as a Banbury® mixer) wherein the conventional mixing and dispersion step (P1) is carried out. At least the elastomeric polymer (D), the reinforcing filler (E), the vulcanising agent (F) and, in full or in part, the liquid polymer (A) and/or the resin (B) and/or any oil (C) are fed to the discontinuous mixer (201), all together from the beginning or separately during multiple subsequent mixing, as described above (202) (203).

Preferably, the optional components not mentioned above - such as coupling agents (G), accelerants, retardants and various additives - are added in the conventional mixing and dispersion step (P1). After the conventional mixing (P1) has been carried out, the first vulcanisable elastomeric composition (204) is possibly fed to the continuous mixer (205) (for example a self-cleaning twin-screw, co-rotating and penetrating extruder) through a feeding hopper (405).

According to the embodiment in Figure 4, the vulcanisable elastomeric composition (204) of the first step is unloaded from the discontinuous mixer (201) to an optional conveyor device (301) (such as a single-screw helical extruder) through a feeding hopper (302).

The vulcanisable elastomeric composition (204) of the first step is delivered by the conveyor device (301) for example in the form of a sheet or continuous tape, by pumping it through a roller or calender nozzle (303), for example by means of a gear pump (not shown in Figure 4).

Alternatively (not shown in Figure 4), the conveyor device (301) instead of the roller nozzle (303) can be provided with:
- an extrusion nozzle provided with a perforated extrusion plate provided with knives in order to obtain the elastomeric composition of the first step in the form of a divided product before feeding it to the continuous mixer (205) (after possible storage);
- an open mouth in order to allow the elastomeric composition of the first step of slide directly within the continuous mixer.

Alternatively, the conveyor device (301) may be replaced with an open mixer (not shown in Figure 4). Alternatively, an open mixer may be arranged between the discontinuous mixer (201) and the conveyor device (301) (not shown in Figure 4).

According to the particular embodiment in Figure 4, the elastomeric composition (204) of the first step at the exit from the conveyor (301) is cooled, preferably to room temperature, by passing it through a cooling device (211), before being fed to the continuous mixing device (205). Said cooling may be useful in order to increase the viscosity of the elastomeric composition of the first step before feeding it to said continuous mixer to allow better mixing of the elastomeric composition of the first step within said continuous mixer (205).

Alternatively (not shown), the elastomeric composition (204) of the first step, at the exit from the conveyor (301), after being cooled by passing it through the cooling device (211), can be transformed into a product divided by means of a cutting device (for example a mill provided with rotating blades) before being possibly fed to the continuous mixer (205) (after possible storage). Preferably, in this case, the possible feeding to the continuous mixer (205) can be controlled by means of feeders (volumetric or weight loss feeders) (not shown in Figure 4).

Optionally, the liquid polymer (A) and/or the resin (B) and/or any oil (C) can be fed, in full or in part, (411) to the continuous mixing device (205) together with the vulcanisable elastomeric composition (204) of the first step.

The continuous mixer (205) in Figure 4 only shows one feeding hopper (405). However, multiple feeding hoppers (not shown in Figure 4) may be present on the mixer (205).

The continuous mixing device (205) is provided with one or more suction units (208) to allow the suction of fluids and gases that may develop during the mixing of the elastomeric composition.

After the possible reworking (possible step P2) has been carried out, the elastomeric composition (209) is unloaded from the continuous mixing device (205), for example in the form of a continuous tape, by pumping it through a roller or calender nozzle (210), for example by means of a gear pump (not shown in Figure 4).

Alternatively, the elastomeric (209) composition can be transformed in a divided product by pumping it through an extrusion nozzle (not shown in Figure 4) arranged at the head of the continuous mixer, said extrusion nozzle being provided with a perforated extrusion plate provided with knives, by means of a gear pump (not shown in Figure 4). The product obtained in divided form is subsequently cooled, preferably to room temperature, for example by conveying it towards a cooling device (not shown in Figure 4).

The elastomeric composition (209) may be fed (408) to a second discontinuous mixing device (401) (for example a Banbury® mixer) for a further mixing step. Possibly in this case, the second discontinuous mixer (401) is also fed with the vulcanising agent (F) and any optional components such as coupling agents (G), accelerants, retardants and various additives not fed during step (P1).

According to the particular embodiment in Figure 4, the elastomeric composition (209) is cooled, preferably to room temperature, by passing it through a cooling device (211) before being fed to said second discontinuous mixer (401).

Alternatively (not shown in Figure 4), the elastomeric composition (209) can be fed directly, without being cooled, to said second discontinuous mixer (401).

Alternatively (not shown in Figure 4), the elastomeric composition (209) can be obtained in the form of a divided product, as described above, and then be fed to said second discontinuous mixer (401).

The final elastomeric composition (412) is then unloaded from said second discontinuous mixer (401), preferably using a conveyor device, not shown, combined with the second mixer (401) as described above with reference to the conveyor (301). The final elastomeric composition (412) is typically unloaded from the conveyor in the form of a sheet, pumping it through an extrusion nozzle or a roller nozzle (not shown).

The resulting sheet is usually subjected to a cooling treatment, typically by using water and/or forced air. The sheet thus treated is then arranged on benches or coils awaiting further working.

Typically, the final elastomeric composition (412) is fed to a device for manufacturing a semi-finished product (not shown in Figure 4), such as a single screw short cylinder extruder with hot feeding, so as to obtain a tread band.

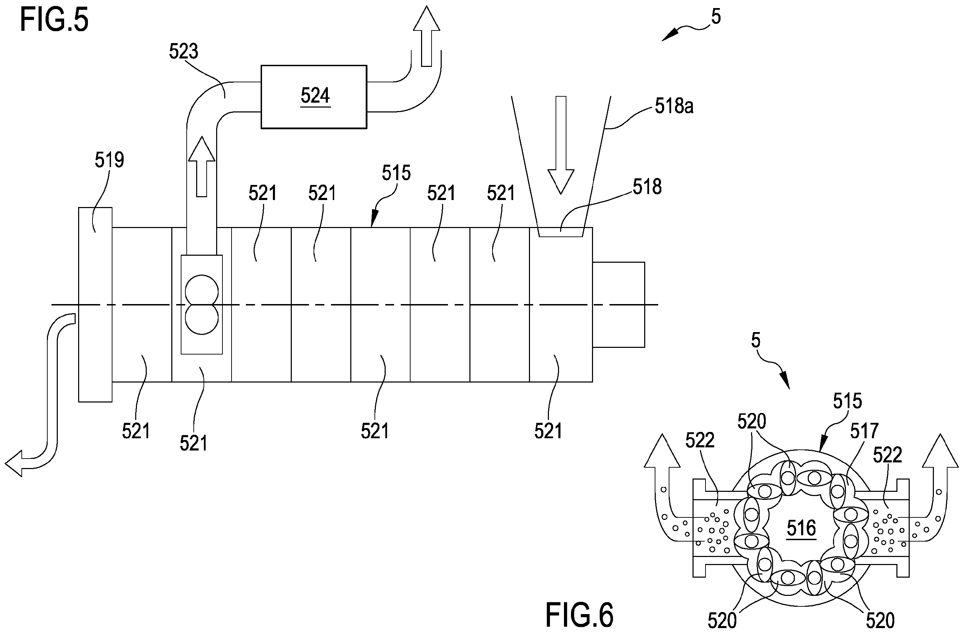

With reference to figures 5 and 6, the continuous mixer (5) comprises a substantially cylindrical containment body (515) which develops mainly along a longitudinal direction and carries a mandrel (516) within its own chamber. An inner annular chamber (517) is delimited between a radially outer surface of the mandrel (516) and a radially inner surface of the containment body (515) (Figure 6), which partially coincides with the chamber of the containment body (515). The mandrel (516) extends along a longitudinal axis "X-X" and is coaxially mounted fixed in the containment body (515).

The containment body (515) has at least one feeding opening (518) which opens radially in a lateral wall of the same, preferably with a hopper (518a), to allow the possible introduction into the annular chamber (517) of the first vulcanisable elastomeric composition produced before in the conventional step (P1), for example in a discontinuous mixer, and possibly, in full or in part, the liquid polymer (A) and/or the resin (B) and/or any oil (C).

The containment body (515) further has an outlet opening for the finished composition arranged at a distal end of the body (515) itself, for example at an extrusion head (519).

Mixing screws (520), preferably in number equal to or greater six (twelve in the embodiment shown), are arranged in the annular chamber (517), around the mandrel (516) and parallel to the longitudinal axis "X-X". The screws (520) are inter-penetrating and self-cleaning, are rotatably supported by the containment body (515) and extend substantially along the entire longitudinal extension of the annular chamber (517). The mixing screws (520) are moved in rotation by a motor, not shown, and have, along their longitudinal development, zones with different structural features for subjecting the composition to different process steps. The mixing screws (520) with their rotation advance the components of the composition in a predetermined transport direction and, at the same time, treat the same so as to produce the final elastomeric composition itself and impart the desired chemical-physical features thereto before it is unloaded through the outlet opening. For example, along said transport direction of the compound, the continuous mixer (5) has a material feeding zone, a chewing zone, a mixing zone and a transport zone towards said outlet opening. Regardless of the specific sequence of zones with different treatment, intense chewing zones, transport zones and mixed zones are provided. In intense chewing zones, the material is subjected to shear and axial stresses with production of heat due to the viscosity of the materials treated. In these zones, the filling of the annular chamber portion (517) is almost total and the treated materials lie substantially in contact with all the corresponding radially inner surface of the containment body (515) and with the corresponding radially outer surface of the mandrel (516). In the transport zones, the filling of the annular chamber (517) is of between about 20% and 50% and the materials are subject to lower stresses/deformations.

The containment body (515) has (figure 6), at the radially inner surface thereof, concavities which develop parallel to the longitudinal axis "X-X" and have a circular arc cross section. The mandrel (516) has (figure 6), at the radially outer surface thereof, corresponding concavities which develop parallel to the longitudinal axis "X-X" and have a circular arc cross section. The screws (520) are housed in such concavities.

The containment body (515) has (figure 5) a tubular shape and is formed by a plurality of annular segments (521) aligned along the longitudinal axis "X-X".

The annular segment (521) further downstream, with respect to the advancement direction of the compound, comprises hopper the 518a which ends in the feeding opening 518.

As shown in figures 5 and 6, the penultimate annular segment (521), counted starting from the feeding opening (518) towards the extrusion head (519), is provided with a pair of diametrically opposed conduits (522) that open into the inner annular chamber (517). Preferably, each of the conduits (522) is in fluid communication, via appropriate piping (523), with one or more vacuum pumps (524). The vacuum pump (524) preferably is a dry type and preferably has a nominal suction capacity of between about 100 m³/h and about 450 m³/h and an electric motor power demand of between about 2 kW and about 15 kW.

Preferably, at least one discontinuous mixer, such as a Banbury, may be provided upstream and/or downstream of the continuous mixer (5).

With reference to figures 5 and 6, in the possible reworking step (P2), the first elastomeric composition previously obtained in the conventional step P1 by one or more mixing processes carried out in a discontinuous mixer, such as one or more Banbury®, optionally together with, in full or in part, the liquid polymer (A) and/or the resin (B) and/or any oil (C) may be introduced through the feeding opening (518).

The composition is advanced by the mixing screws (520) towards the extrusion head (519) and at the same time intensely reworked so as to produce the final composition, thus imparting the desired chemical-physical features to the same, before it is unloaded through the outlet opening. Before unloading the composition from the extrusion head (519), a suction from the inner chamber (517) towards the outside is preferably carried out under high vacuum, at the segment (521) provided with the conduits (522), so as to extract substances in the fluid state (gases, liquids, vapours) from the composition.

Preferably, the pump (524) is made to work to generate high vacuum, or a suction pressure Pa lower than 150 mbar, preferably lower than 100 mbar and even more preferably lower than 50 mbar or 40 mbar. The substances extracted by the pump (524) are then subsequently conveyed to appropriate filtering devices, not shown.

The following examples are now provided for merely illustrative and non-limiting purposes of the present invention.

### EXAMPLES

Where not indicated otherwise, in the present experimental part the components of the compositions are expressed in phr (parts per hundreds of rubber).

The following Table 1 summarizes the compositions of the plasticising mixtures, expressed in phr, used in the preparation of materials for treads of the comparative tests and according to the invention of Examples 1 to 8:

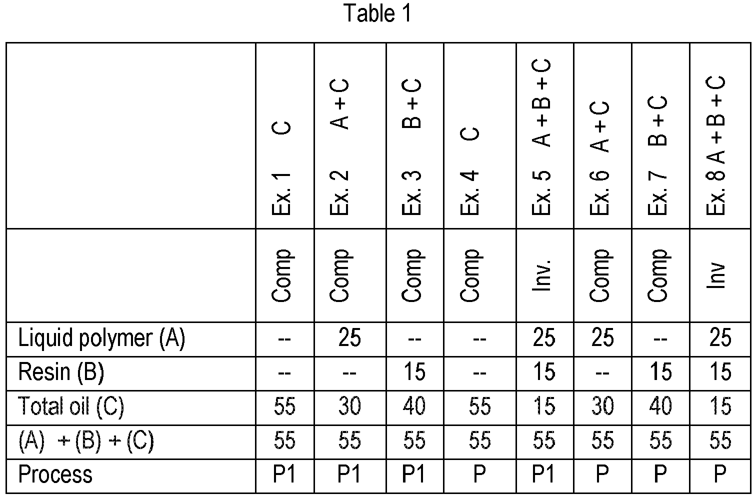

where Comp. are comparative compositions and Inv. are compositions according to the invention, P1 means a conventional mixing and dispersion process, comprising three subsequent mixing steps in discontinuous mixers and P means a process which, in addition to said conventional mixing and dispersion process (P1), comprises at least one possible reworking step (P2) carried out in a continuous mixer, preferably under high vacuum.

The compositions of Examples from 1 to 8 are typical compositions for winter treads.

The comparative composition of Example 1 is a standard winter tread composition, not comprising the liquid polymer (A) and the resin (B), but only process oil (C), obtained by a conventional process (P1) (three subsequent mixing steps in a discontinuous mixer).

The comparative composition of Example 2 is a winter tread composition comprising a liquid polymer (A) and a process oil (C), but not the resin (B), obtained by a conventional process (P1) (three subsequent mixing steps in a discontinuous mixer).

The comparative composition of Example 3 is for a winter tread composition comprising a resin (B) and process oil (C), but not the liquid polymer A, obtained by a conventional process (P1) (three subsequent mixing steps in a discontinuous mixer).

The comparative composition of Example 4 is a standard winter tread composition, not comprising the liquid polymer (A) and the resin (B), but only process oil (C), obtained by a process (P1) (comprising a conventional step P1 with three mixing steps in discontinuous mixers followed by a reworking step (P2) in a continuous mixer).

The inventive composition of Example 5 is a winter tread composition comprising a liquid polybutadiene (A), a resin (B) and process oil (C), obtained by a conventional process (P1) (three mixing steps in a discontinuous mixer).

The comparative composition of example 6 is a winter tread composition comprising a liquid polymer (A) and a process oil (C), but not a resin (B), obtained by a process (P) (comprising a conventional step (P1) with three mixing steps in discontinuous mixers followed by a reworking step P2 in a continuous mixer).

The comparative composition of example 7 is a tread composition comprising a resin (B) and process oil (C), but not the liquid polymer (A), obtained by a process (P) (comprising a conventional step (P1) with three mixing steps in discontinuous mixers followed by a reworking step (P2) in a continuous mixer).

The composition according to the invention of Example 8 is a winter tread composition comprising a liquid polybutadiene (A), a resin (B) and a process oil (C), obtained by process (P) (comprising a conventional step (P1) with three mixing steps in discontinuous mixers followed by a reworking step (P2) in a continuous mixer).

### Comparative compositions for winter treads (Examples 1-4)

The following Table 2 shows the complete recipes of comparative tread compositions (Examples 1-4) and the type of process used for their preparation:

**Table 2**

| | Ex. 1 C | Ex. 2 A + C | Ex. 3 B +C | Ex. 4 C + P |
|---|---|---|---|---|
| | Comp | Comp | Comp | Comp |
| Liquid polymer (A) | -- | 25 | -- | -- |
| Resin (B) | -- | -- | 15 | -- |
| Plasticiser (oil C) | 40 | 15 | 25 | 40 |
| SBR-mod (D) diluted with 37.5 phr oil TDAE (C) | 40 SBR 15 oil | 40 SBR 15 oil | 40 SBR 15 oil | 40 SBR 15 oil |
| BR (Nd) (D) | 32 | 32 | 32 | 32 |
| NR (D) | 28 | 28 | 28 | 28 |
| Carbon black (E) | 8 | 8 | 8 | 8 |
| Silica (E) | 95 | 95 | 95 | 95 |
| TESPT silane (G) | 6.7 | 6.7 | 6.7 | 6.7 |
| Zinc soap | 3 | 3 | 3 | 3 |
| Wax | 2 | 2 | 2 | 2 |
| Stearic ac. | 3 | 3 | 3 | 3 |
| Zinc oxide | 2.5 | 2.5 | 2.5 | 2.5 |
| 6-PPD | 3 | 3 | 3 | 3 |
| TMQ | 1.5 | 1.5 | 1.5 | 1.5 |
| MBTS | 1.5 | 1.5 | 1.5 | 1.5 |
| CBS | 3 | 3 | 3 | 3 |
| Sulphur (F) | 1.5 | 1.5 | 1.5 | 1.5 |
| Total Phr | 285.7 | 285.7 | 285.7 | 285.7 |
| Total oil (C) | 55 | 30 | 40 | 55 |
| (A) + (B) + (C) | 55 | 55 | 55 | 55 |
| Process | P1 | P1 | P1 | P |

| | | | | |
|---|---|---|---|---|
| wherein Liquid polymer (A): Liquid polybutadiene Polyvest 130 (Evonik); Resin (B): Terpene/styrene copolymer Dercolyte TS105 (DRT); Oil (C): TDAE Treated Distillate Aromatic Extract Vivatec 500 (H&R); SBR (D): Styrene/Butadiene copolymer SLR 4630 (Trinseo) (diluted with 37.5 phr oil every 100 phr dry elastomeric polymer); BR (Nd) (D): polybutadiene (Europrene Neocis® BR40) - Polimeri Europa; NR (D): natural rubber SIR 20; Carbon black (E): N234 (Birla Group); Silica (E): Ultrasil 7000 (Evonik); Silane TESPT: bis(3-triethoxysilylpropyl)tetrasulphide - Si69 (Evonik); Zinc soap: hydrocarbon mixture, zinc soaps and fillers (Aktiplast ST Rheinchemie); Wax: Mixture of N-paraffins (Repsol) (Ozone protection) Stearic acid: (Undesa) (Activator) Zinc oxide: (Rhein Chemie) (Activator) 6-PPD: phenyl-p-phenylenediamine (6-PPD-Akzo Nobel) (Antiozonant); TMQ: 2,2,4-Trimethyl-1,2-dihydroquinoline (Lanxess) (Antioxidant); MBTS: 2.2' Dibenzothiacyl disulphide (Lanxess) (Accelerant); CBS: N-cyclohexyl-2-benzothiazyl-sulfenamide Vulkacit® CZ/C - (Lanxess) (Accelerant); Sulphur: (Zolfoindustria) (vulcanising agent) P1: conventional mixing process (three mixing steps in a discontinuous mixer) as described below. P: mixing process comprising a conventional step (P1), with three mixing steps in succession in a discontinuous mixer, followed by a possible reworking step (P2) in a continuous mixer, as described below. | | | | |

The comparative composition of Example 1 is a typical tread composition of a line of winter tyres and comprises an SBR/BR/NR mixture. The composition, loaded with silica (E), contains a bifunctional silane (TESPT) (G) for the coupling of the filler with the polymers in the mixture. Moreover, the composition includes a significant amount of plasticising oil derived from petroleum (C), in part contained as extender of the solid elastomeric polymer (D) (SBR) and in part added to the composition as a separate ingredient (TDAE) to impart the necessary plasticity of the material.

In the reference composition of Example 2, a part of the plasticising oil (C) was replaced by an equal amount of liquid polymer (A).

In the reference composition of Example 3, a part (10 phr) of the plasticising oil (C) was replaced by an equal amount of resin (B).

The composition of Example 4 comprises the same ingredients as the composition of Example 1 but differs in the preparation process, which in addition to the conventional process (P1), comprises a reworking step in a continuous mixer (P2), as described below.

### Comparative winter tread compositions (Examples 6 - 7) and according to the invention (Examples 5 and 8)

Comparative winter tread compositions (Examples 6-7) and according to the invention (Examples 5 and 8) were prepared with the components and according to the processes shown in the following Table 3:

**Table 3**

| | Ex. 5 A+B+C | Ex. 6 A+C+P | Ex. 7 B+C+P | Ex. 8 A+B+C+P |
|---|---|---|---|---|
| | Inv. | Comp | Comp | Inv |
| Liquid polymer (A) | 25 | 25 | -- | 25 |
| Resin (B) | 15 | -- | 15 | 15 |
| Plasticiser (oil C) | -- | 15 | 25 | -- |
| SBR-mod (D) diluted in oil 37.5 phr TDAE (C) | 40 SBR 15 oil | 40 SBR 15 oil | 40 SBR 15 oil | 40 SBR 15 oil |
| BR (Nd) (D) | 32 | 32 | 32 | 32 |
| NR (D) | 28 | 28 | 28 | 28 |
| Carbon black (E) | 8 | 8 | 8 | 8 |
| Silica (E) | 95 | 95 | 95 | 95 |
| TESPT silane (G) | 6.7 | 6.7 | 6.7 | 6.7 |
| Zinc soap | 3 | 3 | 3 | 3 |
| Wax | 2 | 2 | 2 | 2 |
| Stearic ac. | 3 | 3 | 3 | 3 |
| Zinc oxide | 2.5 | 2.5 | 2.5 | 2.5 |
| 6-PPD | 3 | 3 | 3 | 3 |
| TMQ | 1.5 | 1.5 | 1.5 | 1.5 |
| MBTS | 1.5 | 1.5 | 1.5 | 1.5 |
| CBS | 3 | 3 | 3 | 3 |
| Sulphur (F) | 1.5 | 1.5 | 1.5 | 1.5 |
| Total Phr | 285.7 | 285.7 | 285.7 | 285.7 |
| Total oil (C) | 15 | 30 | 40 | 15 |
| (A) + (B) + (C) | 55 | 55 | 55 | 55 |
| Process | P1 | P | P | P |

wherein the definitions of the materials and processes correspond to those provided at the bottom of Table 2.

### Preparation of compositions for treads according to process (P1)

The comparative elastomeric compositions of Examples 1, 2, 3 and according to the invention 5 were prepared by a conventional mixing and dispersion process (P1) comprising three subsequent mixing sub-steps in a discontinuous mixer (Banbury®), as described herein:

### First sub-step

The liquid polymer (A), the resin (B), the plasticiser (oil C), the elastomers (D), the carbon black and silica fillers (E), the Silane TESPT (G), the zinc soap and the stearic acid - if any - were fed and mixed in a batch mixer Banbury® (Pomini 11D model), which operated under the following conditions:
capacity: 200 l
feeding: 180-190 kg;
unloading temperature: 140-150 °C;
mixing time: 5 minutes;
rotor speed: 40 rpm;
Pressure: ambient

### Second sub-step

The elastomeric composition obtained in the first step, the wax, zinc oxide, the 6-PPD and TMQ were subsequently fed to the same Banbury® described above with reference to sub-step 1 and subjected to a further mixing step under the following conditions:
feeding: 180-190 kg;
unloading temperature: 100 °C;
mixing time: 2-2.5 minutes;
rotor speed: 25-30 rpm;
Pressure: ambient
Third sub-step

The elastomeric composition obtained at the end of the second sub-step and sulphur, CBS and MBTS were subsequently fed to the same Banbury® described above with reference to the first two sub-steps and subjected to a final mixing step under the following conditions:
feeding: 180-190 kg;
unloading temperature: 100 °C;
mixing time: 2-2.5 minutes;
rotor speed: 25-30 rpm;
Pressure: ambient.

The vulcanisable elastomeric composition produced at the end of the third mixing substep in a discontinuous mixer was then unloaded and cooled in air to a temperature of about 25 °C.

### Preparation of compositions for treads according to process (P): conventional step (P1) + reworking step (P2)

The elastomeric compositions of Examples 4, 6, 7 (comparative) and 8 (invention) were prepared according to a process (P) which comprises the conventional mixing and dispersion process (P1) described above - with three subsequent mixing steps in discontinuous mixers - followed by a reworking step (P2) in a continuous mixer, under high vacuum.

In particular, the elastomeric composition produced at the end of the conventional step (P1) described above (first elastomeric composition) was fed to a continuous co-rotating twin-screw mixer having a cylinder diameter of 40 mm and an L/D ratio of 48 (model Maris TM40HT) and subjected to a further reworking step under the following conditions:
feeding: 70 kg/h;
composition temperature in output from the mixer: 133°C;
screw speed: 220 rpm;
filling degree: 77%
specific energy: 0.22 kWh/kg
suction pressure: 40 mbar

The final vulcanisable elastomeric composition was continuously unloaded and cooled by a bath in water, fed directly to an extruder and unloaded in the form of a sheet.

### Evaluation of the properties of the elastomeric compositions of Examples 1-8

### Properties of non-vulcanised compositions

The vulcanisable (green) elastomeric compositions of Examples 1-8 were subjected to the following evaluations:
Mooney viscosity ML (1 +4) at 100 °C was measured according to the ISO 289-1:2005 standard.
Scorching time was measured at 127 °C according to the ISO 289-2:1994 standard.
Rheometric analysis MDR (according to ISO 6502) using an Alpha Technologies rheometer type MDR2000, the tests were carried out at 170 °C for 20 minutes at an oscillation frequency of 1.66 Hz (100 oscillations per minute) and an oscillation amplitude of ± 0.5°, measuring the time necessary to achieve an increase of two rheometric units (TS2) and the time necessary to achieve 30% (T30) and 90% (T90), respectively, of the final torque value (Mf). The maximum torque value MH and the minimum torque value ML were also measured.

### Properties of vulcanised compositions

The vulcanised elastomeric compositions of Examples 1-8 were subjected to the following evaluations after vulcanisation:
The static mechanical properties were measured at 23 °C according to the ISO 37:2005 standard.

In particular, the load at different levels of elongation (50%, 100% and 300%, named in succession CA05 - CA1 - CA3), the load at break CR and elongation at break AR were measured on samples of the elastomeric compositions mentioned above, vulcanised at 170 °C for 10 minutes.

The tensile tests were carried out on straight axis Dumbell specimens.

The hardness in IRHD degrees (23 °C) was measured according to the ISO 48:2007 standard on samples of the elastomeric materials mentioned above, vulcanised at 170 °C for 10 minutes.

The Shore A hardness was evaluated according to ASTM D2240 at 23 °C.

The dynamic mechanical properties were measured using an Instron dynamic device in traction-compression mode according to the following methods. A sample of the green elastomeric compositions of Examples 1 - 8 vulcanised at 170 °C for 10 minutes having a cylindrical shape (length = 25 mm; diameter = 14 mm), pre-load compression up to 25% of the longitudinal deformation with respect to the initial length and maintained at the predetermined temperature (equal to -10 °C, 0 °C, 23°C or 70°C) for the whole duration of the test, was subjected to a dynamic sinusoidal strain having an amplitude of ±3.5% with respect to the length under pre-load, with a frequency of 10 Hz.

The dynamic mechanical properties are expressed in terms of dynamic elastic modulus (E') and Tan delta (dissipation factor). The Tan delta value was calculated as a ratio of the viscous modulus (E") to the elastic modulus (E').

The following Table 5 shows the results of the analyses described above for the samples of the comparative compositions according to Examples 1-4. The measurement values were remeasured considering 100 the values obtained with the composition of Example 1 taken as a reference.

**Table 5**

| Parameter/Test | Unit of measurement | Ex. 1 | Ex. 2 | Ex. 3 | Ex. 4 |
|---|---|---|---|---|---|
| | | C | A+C | B+C | C+P |
| | | Comp | Comp | Comp | Comp |
| CA0.5 | MPa | 100 | 88 | 109 | 94 |
| CA1 | MPa | 100 | 93 | 110 | 93 |
| CA3 | MPa | 100 | 99 | 109 | 92 |
| CR | MPa | 100 | 98 | 102 | 101 |
| AR | % | 100 | 100 | 96 | 105 |
| IRHD | IRHD | 100 | 92 | 102 | 98 |
| Shore A hardness | Shore A | 100 | 93 | 102 | 99 |
| Mooney ML(1 +4) at 100 °C | MU | 100 | 83 | 98 | 94 |
| E' 10 Hz -10 °C | MPa | 100 | 85 | 104 | 100 |
| Tan d 10 Hz-10 °C | | 100 | 91 | 103 | 106 |
| E' 10 Hz 0°C | MPa | 100 | 84 | 104 | 100 |
| Tan d 10 Hz 0°C | | 100 | 93 | 100 | 108 |
| E' 10Hz 23°C | MPa | 100 | 87 | 109 | 99 |
| Tan d 10 Hz 23°C | | 100 | 97 | 96 | 108 |
| E' 10 Hz 70°C | MPa | 100 | 90 | 105 | 98 |
| Tan d 10 Hz 70°C | | 100 | 100 | 92 | 103 |
| ML | dNm | 100 | 84 | 102 | 94 |
| MH | dNm | 100 | 87 | 104 | 97 |
| TS1 | min. | 100 | 131 | 74 | 82 |
| TS2 | min. | 100 | 178 | 92 | 77 |
| T30 | min. | 100 | 143 | 104 | 97 |
| T60 | min. | 100 | 126 | 101 | 102 |
| T90 | min. | 100 | 110 | 99 | 100 |
| Scorching time MS t5 | min. | 100 | 213 | 105 | 115 |

The following Table 6 shows the results of the analyses described above for the samples of the comparative compositions of Examples 6 and 7 and according to the invention of Examples 5 and 8. The measurement values were remeasured considering 100 the values obtained with the composition of Example 1 taken as a reference.

**Table 6**

| Parameter | Unit of measurement | Ex. 1 C | Ex. 5 A + B + C | Ex. 6 A + C + P | Ex. 7 B + C + P | Ex. 8 A+ B+C+P |
|---|---|---|---|---|---|---|
| | | Comp | Inv. | Comp | Comp | Inv |
| CAO.5 | MPa | 100 | 91 | 89 | 86 | 90 |
| CA1 | MPa | 100 | 90 | 87 | 85 | 88 |
| CA3 | MPa | 100 | 90 | 83 | 88 | 86 |
| CR | MPa | 100 | 100 | 99 | 105 | 99 |
| AR | % | 100 | 106 | 110 | 111 | 106 |
| IRHD | IRHD | 100 | 93 | 96 | 90 | 94 |
| Shore A hardness | Shore A | 100 | 93 | 95 | 92 | 95 |
| Mooney ML (1+4) 100 °C | MU | 100 | 95 | 87 | 87 | 83 |
| E' -10 °C | MPa | 100 | 96 | 98 | 92 | 97 |
| Tan d -10 °C | | 100 | 96 | 96 | 103 | 101 |
| E' 100 °C | MPa | 100 | 96 | 98 | 89 | 95 |
| Tan d 0°C | | 100 | 97 | 100 | 104 | 104 |
| E' 23°C | MPa | 100 | 98 | 98 | 92 | 95 |
| Tan d 23°C | | 100 | 105 | 109 | 108 | 116 |
| E' 70°C | MPa | 100 | 94 | 96 | 87 | 93 |
| Tan d 70°C | | 100 | 107 | 110 | 108 | 121 |
| ML | dNm | 100 | 89 | 88 | 85 | 80 |
| MH | dNm | 100 | 85 | 90 | 86 | 85 |
| TS1 | min. | 100 | 134 | 80 | 102 | 76 |
| TS2 | min. | 100 | 124 | 84 | 152 | 74 |
| T30 | min. | 100 | 107 | 102 | 131 | 104 |
| T60 | min. | 100 | 108 | 106 | 118 | 109 |
| T90 | min. | 100 | 122 | 102 | 114 | 105 |
| MS t5 | min. | 100 | 124 | 127 | 188 | 156 |

| | | | | | | |
|---|---|---|---|---|---|---|
| Legend: E' and tan d measured at 10 Hz; Mooney: ML (1 +4); MS t5: Scorching time | | | | | | |

### Driving tests

Winter tyres for passenger cars were produced with tread band prepared by vulcanisation of the comparative elastomeric compositions of Examples 1, 2, 3, 4, 6 and 7 and of the compositions according to the invention of Examples 5 and 8, and subjected to driving tests.

All tyres measured 225/45 R17 with 6.0J rim and pressure of 2.2 bar for the front tyres and 2 bar for the rear. The tests were carried out by equipping a Volkswagen Golf car for tests on snow and a Fiat Punto for the other tests.

Braking tests on dry and wet roads, behaviour tests driving on dry and wet roads and driving and braking tests on snow-covered road were conducted.

The braking test, in both dry and wet conditions, is carried out with winter tyres fitted to a vehicle equipped with wheel anti-blocking system (A.B.S.).

This braking test was carried out on a straight asphalt section both in dry and wet conditions, measuring the stopping distance from a predetermined initial speed, typically 100 km/h in dry conditions and 80 km/h in wet conditions.

The behaviour test in driving in wet and dry road conditions, is carried out on predetermined paths, typically circuits closed to traffic. By simulating some typical manoeuvres (such as changing lanes, overtaking, slalom between skittles, entering and exiting corners) performed at a constant speed, and in acceleration and deceleration, the winter tyre performance is evaluated by the test driver giving a numerical evaluation of the behaviour of the latter during the above manoeuvres.

The braking test on snow-covered road was carried out subjecting the vehicle to deceleration from 50 to 5 km/h using both the wheel anti-blocking system (A.B.S.) and the drive with blocked wheels.

The driving test on snow-covered road was carried out by subjecting the vehicle to acceleration from 0 to 35/40 km/h, where the tensile force exerted by the winter tyre on the road surface covered with snow is detected by means of accelerometers.

The results of the driving tests are shown in Tables 8, 9 and 10, where the rating is remeasured by setting the rating of the reference winter tyre (tread composition of Example 1) equal to 100:

**Table 8**

| Driving tests | Ex. 1 C | Ex. 2 A+C | Ex. 3 B+C | Ex. 4 C+P |
|---|---|---|---|---|
| | Comp | Comp | Comp | Comp |
| Driving and braking on snow | 100 | 103 | 97 | 100 |
| Behaviour on wet | 100 | 99 | 105 | 102 |
| Behaviour on dry | 100 | 92 | 105 | 105 |
| Braking on wet | 100 | 97 | 105 | 100 |
| Braking on dry | 100 | 100 | 101 | 100 |

In tables 8, 9, and 10 relating to the driving test results, an increase in the value with respect to 100 indicates an improvement with regard to that parameter (e.g. 103 vs 100 in the driving and braking on snow means that the winter tyre behaves better - that is, shows a superior driving and a shorter braking distance on snow - compared to the tyre with a tread according to the reference Example 1). Likewise, a reduction of the value (e.g. from 100 to 92 in the behaviour on dry, from the composition of Example 1 to that of Example 2) represents a worsened performance.

Example 2 shows the effect of replacing part of the plasticiser (C) (TDAE oil derived from petroleum) with a liquid polymer (A) (Polyvest130), a polymer characterised by a lower Tg (Tg about -99 °C) compared to the TDAE oil (Tg -50 °C) and a higher molecular weight (about 4600 Da).

The comparative material of Example 2 therefore has a lower Tg than that of the material of Example 1 and consequently a higher flexibility at low temperatures, as confirmed by the lower value of E' measured at -10 °C (dynamic rigidity lower by about 15%) (Table 5). The greater flexibility of the material results in an improvement of the driving performance on snow, in line with the results of the driving tests shown in Table 8 above (driving and braking on snow, Ex. 1 100 vs Ex. 2 103). At the same time, however, the hysteresis at 0 °C and -10 °C - considered predictive of the behaviour and braking on wet - is decreased (see tan delta at 0 °C and -10 °C in Table 5) as is the dynamic rigidity at 70 °C (E'), a magnitude related to the performance on dry. A reduction of the dynamic module E' at 70 °C corresponds to a sharp worsening of behaviour on dry surfaces, especially in the case of winter tyre with a quite mobile tread pattern.

In conclusion, the introduction of the liquid polymer (A) alone in the composition does not solve the conflict of performance on the snow compared to those on dry and wet. In fact, it can be seen in table 8 that while the driving performance is significantly improved on the snow, they are worsened in the behaviour and/or braking on dry and wet surface.

In the comparative composition of Example 3, the partial replacement of the plasticising oil (C) with a plant-based resin (B) (natural terpene copolymerised with styrene, Dercolyte TS105) leads to a material with modulus of elasticity E' higher than -10 °C and with higher hysteresis at -10 °C and a hysteresis substantially unchanged at 0 °C compared to the reference of Example 1.

This resin has a higher Tg than that of TDAE (+ 55 °C vs -50 °C) and thus, the Tg of the material of Example 3 is shifted to higher temperatures.

Accordingly, the flexibility of the material at low temperatures is lower, as confirmed by the higher dynamic rigidity at both -10 °C and at 0 °C of the sample of Example 3 compared to the reference of Example 1 (E' at -10 °C +4%). The increase in rigidity is also present at 70 °C (E' +5%). These variations in the material properties are reflected in the performance of the tyres which are worsened on snow and improved on wet and dry, both in terms of behaviour and braking (Table 8).

Example 4 of Table 8 shows the effect that the specific preparation process (P) as defined above, in particular the continuous reworking step (P2), preferably under high vacuum, has on the material properties.

It is noted that the behaviour on wet and dry is improved without substantially changing other performances, in particular without improving the performance on snow. Table 5 shows an increase of hysteresis at 0 °C (tan delta 0 °C +8%) while the low-temperature flexibility (E' at -10 °C) remains unchanged. Although the material of Example 4 has a slightly lower (-2%) dynamic rigidity at 70 °C, the tyre is more performing on dry.

The following Table 9 shows the results of the driving tests conducted with winter tyres comprising the comparative compositions of Examples 6 and 7 and of the invention according to Examples 5 and 8, remeasured by setting the values obtained with the material of the reference Example 1 equal to 100:

**Table 9**

| Driving tests | Ex. 1 C | Ex. 5 A+B+C | Ex. 6 A+C+P | Ex. 7 B+C+P | Ex. 8 A+B+C+P |
|---|---|---|---|---|---|
| | Comp | Inv. | Comp | Comp | Inv |
| Driving and braking on snow | 100 | 102 | 102 | 100 | 103 |
| Behaviour on wet | 100 | 98 | 92 | 100 | 110 |
| Behaviour on dry | 100 | 105 | 105 | 102 | 113 |
| Braking on wet | 100 | 99 | 96 | 103 | 102 |
| Braking on dry | 100 | 101 | 97 | 100 | 100 |

The performance of the compositions of the reference Examples 6 and 7 - compositions in which partial combinations of the relevant features liquid polymer (A), resin (B), oil (C) and possibly (P) (process comprising a continuous reworking step P2, preferably under vacuum) are present - support the unpredictability of the improved winter performance of the compositions according to the invention of Examples 5 and 8 - in which all the features (A), (B), (C) and (P), respectively, are combined.

The inventive composition of Example 5 shows that by replacing part of the plasticising oil (C) with a combination of liquid polymer (A) and resin (B), keeping the same conventional dispersion and mixing process (P1), it is possible to improve the behaviour on dry and snow, compared to the reference composition of Example 1 without a significant worsening of performance on wet.

In the composition of Example 6, the combination of liquid polymer (A) and mixing process (P) basically determines the same performance already observed for the sample of Example 5. In fact, an improved performance is observed on snow and in the behaviour on dry but a more marked worsening of behaviour on wet.

Finally, the effect of the resin (B) and mixing process (P) combination was tested with the comparative composition of Example 7. As can be seen from the results of the driving tests, this composition shows a good level of balanced performance without however reaching the goal of improving the performance on snow.

On the contrary, the composition according to the invention of Example 8 shows that by combining the features (A), (B), (C) and (D), the performance in the driving tests on snow and behaviour on wet and dry all improve simultaneously and without affecting other parameters.

The tyres comprising the compositions of the invention behave well on snow: flexibility at low temperatures (table 6) is lower than that of the reference composition of Example 1 (E' at 0 °C -5%, E' at -10 °C -3%). In addition, they are at least comparable if not much better than the reference tyres in the behaviour on wet and dry roads. By comparing the performance of the inventive composition of example 8 with that of the inventive composition of Example 5, prepared according to a conventional mixing process, it is also possible to appreciate the unexpected contribution of the continuous reworking step (P2), preferably under high vacuum, on the properties of materials, both on the performance on snow and especially on dry and wet.

Such an evident improvement of the latter performance is unpredictable in the light of the values measured for the properties deemed as predictive, i.e. hysteresis at 0 °C (Tan delta 0 °C) for behaviour on wet, and even more the dynamic rigidity at high temperature (E' at 70 °C), for the behaviour on dry, values that do not predict such an increase.

Generally, in fact, the dynamic rigidity E' in compositions for winter tyres should be kept at 70 °C in order to improve the behaviour on dry.

Instead for the compositions of Examples 5 and 8 of the invention, the value of E' at 70 °C decreased (-6% and -7%) compared to that of the reference composition of Example 1 (Table 6) against a definitely improved behaviour on dry (105 vs 100 and 113 vs 100) (Table 9).

As regards the behaviour on wet, the excellent performance of the composition of example 8 of the invention (at least +10% with respect to all the reference examples) could not be predicted on the basis of the results obtained with the compositions characterised by a pair of parameters (AC or BC or CP of Examples 2-4) or by the combination of three of these (ACP and BCP) of the comparative Examples 6 and 7.

### Calculation of the performance for the composition of Example 8

To further support the unpredictability of the results obtained with the compositions of the invention, the theoretical values of performance on snow, of behaviour and braking on wet and dry roads were calculated according to an additive model, i.e. by adding the mean value of the contribution of features (A), (B), and (P), a contribution obtained by the comparison of the values measured for the compositions of Ex. 2 (contribution of A), Ex. 3 (contribution of B) and Ex. 4 (contribution of P) with respect to the corresponding values measured for the reference composition of Example 1 (Table 8). The contributions of the single elements (A), (B) and (P) (in brackets), the mean theoretical values calculated with them and the actual values of the properties of tyres comprising the compositions of Examples 5 and 8 measured in the driving tests are shown in the following Table 10:

**Table 10**

| Driving tests | Ex. 1 C | Ex. 2 A+C | Ex. 3 B+C | Ex. 5 A+B+C | Ex. 5 A+B+C | Ex. 4 C + P | Ex. 8 A+B+C+P | Ex. 8 A+B+C+P |
|---|---|---|---|---|---|---|---|---|
| | Comp | Comp | Comp | INV | INV | Comp | INV | INV |
| | | | | Calc. | Meas. | | Calc. | Meas. |
| Driving and braking on snow | 100 | 103 (+3) | 97 (-3) | 100 (0)* | 102 | 100 (0) | 100 (0)* | 103 |
| Behaviour on wet | 100 | 99 (-1) | 105 (+5) | 102 (+2)* | 98 | 102 (+2) | 102 (+2)* | 110 |
| Behaviour on dry | 100 | 92 (-8) | 105 (+5) | 98.5 (-1.5)* | 105 | 105 (+5) | 100.7 (+0.7)* | 113 |
| Braking on wet | 100 | 97 (-3) | 105 (+5) | 101 (+1)* | 99 | 100 (0) | 100.7 (+0.7)* | 102 |
| Braking on dry | 100 | 100 (0) | 101 (+1) | 100.5 (+0.5)* | 101 | 100 (0) | 100.3 (0.3)* | 100 |

| | | | | | | | | |
|---|---|---|---|---|---|---|---|---|
| Comp: comparative; INV: invention; Calc.: calculated value; Meas.: value measured in the test; *average value calculated of the contribution of the specific property. | | | | | | | | |

Table 10 shows that the measured values for the composition of Example 5 of driving and braking on snow and behaviour on dry are higher than those expected (calculated).

Moreover, the measured values for the composition of Example 8 of driving and braking on snow, behaviour on wet and dry and wet braking are higher than those expected (calculated), demonstrating an unexpected synergy between the components (A), (B), (C) and the specific mixing process (P). Moreover, it is seen that the calculated performance (expected performance) would correspond to tyres slightly improved in terms of behaviour on dry and wet and wet braking, but not as satisfactory for the performance on snow.

## Claims

1. Vulcanisable elastomeric composition for winter tyres comprising at least:
one quantity X equal to at least 1 phr of at least one liquid polymer (A) selected from among a liquid polybutadiene, a liquid polyisoprene and/or mixtures thereof,
one quantity Y equal to at least 11 phr of at least one resin (B) selected from among hydrocarbon resins,
phenolic resins and natural resins,
one quantity Z of at least 5 phr of at least one plasticising oil (C),
100 phr of a mixture of solid diene elastomeric polymers (D),
wherein said mixture (D) comprises:
from 0 to 95 phr of at least one styrene-butadiene polymer (SBR),
from 0 to 95 phr of at least one polybutadiene polymer (BR), and
from 5 to 100 phr of at least one polyisoprene polymer (IR),
at least 10 phr of at least one reinforcing filler (E), and
at least 0.05 phr of at least one vulcanising agent (F).

2. The composition as claimed in claim 1 wherein said mixture (D) comprises:
- from 20 to 95 phr, of at least one styrene-butadiene polymer (SBR),
- from 0 to 60 phr, of at least one polybutadiene polymer (BR), and
- from 5 to 80 phr, of at least one polyisoprene polymer (IR).

3. The composition as claimed in claim 1 or 2 comprising at least:
one quantity X of at least one liquid polymer (A) of at least 3 phr or 5 phr or 10 phr ; and/or of less than 70 phr,
or less than 60 phr, or less than 50 phr and/or
one quantity Y of at least one resin (B) of less than 40 phr or 30 phr or 25 phr ; and/or
one quantity Z of at least one plasticising oil (C) of at least 10 phr; and/or of less than 70 phr or 60 phr or 50 phr; , and/or
- at least 20 phr or 30 and/or no more than 150 phr or 140 phr of at least one reinforcing filler (E).

4. The composition as claimed in any one of the preceding claims, wherein:
- said liquid polymer (A) is **characterised by** a weight-average molecular weight (Mw) not greater than 80000 g/mol, and/or by a glass transition temperature (Tg) less than 0°C;
- said resin (B) is **characterised by** a weight-average molecular weight (Mw) comprised between 200 and 3000 g/mol and/or by a glass transition temperature (Tg) greater than 0°C and/or by a softening temperature (Tm) greater than 25°C or, for a liquid resin (B), less than 25°C, preferably less than 0°C.

5. The composition as claimed in any one of the preceding claims wherein the at least one liquid polymer (A) is selected from among:
- the liquid polybutadiene polymers **characterised by** a (Mw) comprised between 500 and 30000 g/mol and/or a glass transition temperature (Tg) between -105°C and 0°C; and
- the liquid polyisoprene polymers **characterised by** a Mw comprised between 3000 and 80000 g/mol and/or a glass transition temperature (Tg) comprised between -70°C and -30°C.

6. The composition as claimed in any one of the preceding claims wherein the at least one resin (B) is selected from among:
- the hydrocarbon resins derived from coumarone-indene, styrene-indene, styrene-alkylstyrene, and the aliphatic hydrocarbon resins, preferably having a weight-average molecular weight comprised between 500 and 3000 g/mol;
- the resins alkylphenol-formaldehyde based, alkylphenolic resins modified with rosin, resins alkylphenol-acetylene based, modified alkylphenolic resins and resins terpene-phenol based;
- the polyterpene natural resins selected from among the homo- or copolymers of alpha-pinene, of beta-pinene, of limonene and of aromatic vinyl monomers (styrene) and/or of aromatic monomers (phenol), and the natural resins rosin based.

7. The composition as claimed in any one of the preceding claims wherein the plasticising oil (C) is **characterised by** a weight-average molecular weight (Mw) not greater than 600 g/mol, or, if of the RAE (Residual Aromatic Extract) class, comprised between 400 and 10000 g/mol and/or by a glass transition temperature (Tg) less than -30°C.

8. The composition as claimed in any one of the preceding claims wherein the at least one liquid polymer (A) is a liquid polybutadiene and/or the at least one resin (B) is a terpene/styrene copolymer and/or the at least one plasticising oil (C) is a TDAE (Treated Distillate Aromatic Extract).

9. The composition as claimed in any one of the preceding claims wherein the mixture (D) of solid diene elastomeric polymers comprises
from 40 to 90 phr of at least one styrene-butadiene polymer (SBR),
from 0 to 50 phr of at least one polybutadiene polymer (BR), and
from 10 to 60 phr of at least one polyisoprene polymer (IR); or
from 0 to 50 phr of at least one styrene-butadiene polymer (SBR),
from 30 to 80 phr of at least one polybutadiene polymer (BR), and
from 20 to 70 phr of at least one polyisoprene polymer (IR).

10. The composition as claimed in any one of the preceding claims wherein said solid diene elastomeric polyisoprene polymer (IR) is a natural rubber (NR).

11. The composition as claimed in any one of the preceding claims further comprising:
- from 0.5 to 10 phr of at least one activating agent for the vulcanisation; and/or
- from 0.05 to 10 phr of at least one accelerant for the vulcanisation, and/or
- from 0.05 to 2 phr of at least one retardant for the vulcanisation, and/or
- from 0.1 to 20 phr of at least one coupling agent (G).

12. Component for winter tyres comprising an elastomeric composition obtained by using the vulcanisable elastomeric composition as claimed in any one of the preceding claims from 1 to 11.

13. Winter tyre for vehicles comprising a tyre component comprising a vulcanised elastomeric composition obtained via vulcanisation of the vulcanisable elastomeric composition as claimed in any one of the claims from 1 to 11.

14. The component as claimed in claim 12 or the tyre as claimed in claim 13, wherein said component is not the innermost layer (liner).

15. The component as claimed in claim 12 or 14 or the tyre as claimed in claim 13 or 14 wherein said component is a tread band.

## Patentansprüche

1. Vulkanisierbare Elastomerzusammensetzung für Winterreifen, mindestens umfassend:
eine Menge X, gleich mindestens 1 phr, mindestens eines flüssigen Polymers (A), ausgewählt aus einem flüssigen Polybutadien, einem flüssigen Polyisopren und/oder Mischungen davon,
eine Menge Y, gleich mindestens 11 phr, mindestens eines Harzes (B), ausgewählt aus Kohlenwasserstoffharzen, Phenolharzen und Naturharzen,
eine Menge Z von mindestens 5 phr mindestens eines Weichmacheröls (C),
100 phr einer Mischung aus festen Dienelastomer-Polymeren (D),
wobei die Mischung (D) umfasst:
0 bis 95 phr mindestens eines Styrol-Butadien-Polymers (SBR),
0 bis 95 phr mindestens eines Polybutadien-Polymers (BR) und
5 bis 100 phr mindestens eines Polyisopren-Polymers (IR), mindestens 10 phr mindestens eines verstärkenden Füllstoffs (E) und
mindestens 0,05 phr mindestens eines Vulkanisationsmittels (F) .

2. Zusammensetzung nach Anspruch 1, wobei die Mischung (D) umfasst:
- 20 bis 95 phr mindestens eines Styrol-Butadien-Polymers (SBR),
- 0 bis 60 phr mindestens eines Polybutadien-Polymers (BR) und
- 5 bis 80 phr mindestens eines Polyisopren-Polymers (IR).

3. Zusammensetzung nach Anspruch 1 oder 2, mindestens umfassend:
eine Menge X mindestens eines flüssigen Polymers (A), die mindestens 3 phr oder 5 phr oder 10 phr ausmacht und/oder die weniger als 70 phr oder weniger als 60 phr oder weniger als 50 phr ausmacht, und/oder
eine Menge Y mindestens eines Harzes (B), die weniger als 40 phr oder 30 phr oder 25 phr ausmacht; und/oder
eine Menge Z mindestens eines Weichmacheröls (C), die mindestens 10 phr ausmacht und/oder die weniger als 70 phr oder 60 phr oder 50 phr ausmacht; und/oder
- mindestens 20 phr oder 30 und/oder nicht mehr als 150 phr oder 140 phr mindestens eines verstärkenden Füllstoffs (E).

4. Zusammensetzung nach einem der vorhergehenden Ansprüche, wobei
- das flüssige Polymer (A) **gekennzeichnet ist durch** ein Massenmittel (Mw) von nicht mehr als 80 000 g/mol und/oder durch eine Glasübergangstemperatur (Tg) unter 0°C;
- das Harz (B) **gekennzeichnet ist durch** ein Massenmittel (Mw) im Bereich zwischen 200 und 3 000 g/mol und/oder durch eine Glasübergangstemperatur (Tg) über 0°C und/oder durch eine Erweichungstemperatur (Tm) über 25°C oder, bei einem flüssigen Harz (B), unter 25°C, vorzugsweise unter 0°C.

5. Zusammensetzung nach einem der vorhergehenden Ansprüche, wobei das mindestens eine flüssige Polymer (A) ausgewählt ist aus
- den flüssigen Polybutadien-Polymeren, die **gekennzeichnet sind durch** ein (Mw) im Bereich zwischen 500 und 3 0000 g/mol und/oder eine Glasübergangstemperatur (Tg) zwischen -105°C und 0°C; und
- den flüssigen Polyisopren-Polymeren, die **gekennzeichnet sind durch** ein Mw im Bereich zwischen 3 000 und 80 000 g/mol und/oder eine Glasübergangstemperatur (Tg) im Bereich zwischen -70°C und -30°C.

6. Zusammensetzung nach einem der vorhergehenden Ansprüche, wobei das mindestens eine Harz (B) ausgewählt ist aus
- den Kohlenwasserstoffharzen, gewonnen aus Cumaron-Inden, Styrol-Inden, Styrol-Alkylstyrol, und den aliphatischen Kohlenwasserstoffharzen, vorzugsweise mit einem Massenmittel im Bereich zwischen 500 und 3 000 g/mol;
- den Harzen auf Alkylphenol-Formaldehyd-Basis, mit Kolophonium modifizierten Alkylphenolharzen, Harzen auf Alkylphenol-Acetylen-Basis, modifizierten Alkylphenolharzen und Harzen auf Terpen-Phenol-Basis;
- den natürlichen Polyterpenharzen, ausgewählt aus den Homo- oder Copolymeren von alpha-Pinen, beta-Pinen, Limonen und aromatischen Vinylmonomeren (Styrol) und/oder aromatischen Monomeren (Phenol), und den natürlichen Harzen auf Kolophoniumbasis.

7. Zusammensetzung nach einem der vorhergehenden Ansprüche, wobei das Weichmacheröl (C) **gekennzeichnet ist durch** ein Massenmittel (Mw) von nicht mehr als 600 g/mol, oder, wenn es zur Klasse RAE (nicht kennzeichnungspflichtiges aromatisches Öl aus dem Rückstand der Vakuumdestillation) gehört, im Bereich zwischen 400 und 10 000 g/mol und/oder durch eine Glasübergangstemperatur (Tg) unter -30°C.

8. Zusammensetzung nach einem der vorhergehenden Ansprüche, wobei das mindestens eine flüssige Polymer (A) ein flüssiges Polybutadien ist und/oder das mindestens eine Harz (B) ein Terpen/Styrol-Copolymer ist und/oder das mindestens eine Weichmacheröl (C) ein TDAE (behandeltes nicht kennzeichnungspflichtiges aromatisches Öl) ist.

9. Zusammensetzung nach einem der vorhergehenden Ansprüche, wobei die Mischung (D) der festen Dienelastomer-Polymere umfasst:
40 bis 90 phr mindestens eines Styrol-Butadien-Polymers (SBR),
0 bis 50 phr mindestens eines Polybutadien-Polymers (BR) und
10 bis 60 phr mindestens eines Polyisopren-Polymers (IR) oder
0 bis 50 phr mindestens eines Styrol-Butadien-Polymers (SBR),
30 bis 80 phr mindestens eines Polybutadien-Polymers (BR) und
20 bis 70 phr mindestens eines Polyisopren-Polymers (IR).

10. Zusammensetzung nach einem der vorhergehenden Ansprüche, wobei das feste Dienelastomer-Polyisopren-Polymer (IR) ein Naturkautschuk (NR) ist.

11. Zusammensetzung nach einem der vorhergehenden Ansprüche, ferner umfassend:
- 0,5 bis 10 phr mindestens eines Aktivierungsmittels für die Vulkanisation und/oder
- 0,05 bis 10 phr mindestens eines Beschleunigungsmittels für die Vulkanisation und/oder
- 0,05 bis 2 phr mindestens eines Verzögerungsmittels für die Vulkanisation und/oder
- 0,1 bis 20 phr mindestens eines Haftvermittlers (G).

12. Komponente für Winterreifen, umfassend eine Elastomerzusammensetzung, die unter Verwendung der vulkanisierbaren Elastomerzusammensetzung nach einem der vorhergehenden Ansprüche 1 bis 11 erhalten wird.

13. Winterreifen für Fahrzeuge, umfassend eine Reifenkomponente, die eine vulkanisierte Elastomerzusammensetzung umfasst, die durch Vulkanisation der vulkanisierbaren Elastomerzusammensetzung nach einem der Ansprüche 1 bis 11 erhalten wird.

14. Komponente nach Anspruch 12 oder Reifen nach Anspruch 13, wobei die Komponente nicht die innerste Schicht (Seele) ist.

15. Komponente nach Anspruch 12 oder 14 oder Reifen nach Anspruch 13 oder 14, wobei die Komponente ein Laufflächenband ist.

## Revendications

1. Composition élastomère vulcanisable pour pneus d'hiver comprenant au moins :
une quantité X égale à au moins 1 phr d'au moins un polymère liquide (A) choisi parmi un polybutadiène liquide, un polyisoprène liquide et/ou leurs mélanges,
une quantité Y égale à au moins 11 phr d'au moins une résine (B) choisie parmi des résines hydrocarbonées, des résines phénoliques et des résines naturelles,
une quantité Z d'au moins 5 phr d'au moins une huile plastifiante (C),
100 phr d'un mélange de polymères élastomères diéniques solides (D),
dans laquelle ledit mélange (D) comprend :
0 à 95 phr d'au moins un polymère de styrène-butadiène (SBR),
0 à 95 phr d'au moins un polymère de polybutadiène (BR), et
5 à 100 phr d'au moins un polymère de polyisoprène (IR),
au moins 10 phr d'au moins une charge de renforcement (E), et
au moins 0,05 phr d'au moins un agent de vulcanisation (F).

2. Composition telle que revendiquée dans la revendication 1, dans laquelle ledit mélange (D) comprend :
- 20 à 95 phr, d'au moins un polymère de styrène-butadiène (SBR),
- 0 à 60 phr, d'au moins un polymère de polybutadiène (BR), et
- 5 à 80 phr, d'au moins un polymère de polyisoprène (IR) .

3. Composition telle que revendiquée dans la revendication 1 ou 2 comprenant au moins :
une quantité X d'au moins un polymère liquide (A) d'au moins 3 phr ou 5 phr ou 10 phr ; et/ou de moins de 70 phr, ou moins de 60 phr, ou moins de 50 phr, et/ou
une quantité Y d'au moins une résine (B) de moins de 40 phr ou 30 phr ou 25 phr ; et/ou
une quantité Z d'au moins une huile plastifiante (C) d'au moins 10 phr ; et/ou de moins de 70 phr ou 60 phr ou 50 phr ; et/ou
- au moins 20 phr ou 30 et/ou pas plus de 150 phr ou 140 phr d'au moins une charge de renforcement (E).

4. Composition telle que revendiquée dans l'une quelconque des revendications précédentes, dans laquelle :
- ledit polymère liquide (A) est **caractérisé par** un poids moléculaire moyen en poids (Mw) non supérieur à 80000 g/mol, et/ou par une température de transition vitreuse (Tg) inférieure à 0°C ;
- ladite résine (B) est **caractérisée par** un poids moléculaire moyen en poids (Mw) compris entre 200 et 3000 g/mol et/ou par une température de transition vitreuse (Tg) supérieure à 0°C et/ou par une température de ramollissement (Tm) supérieure à 25°C ou, pour une résine liquide (B), inférieure à 25°C, de préférence inférieure à 0°C.

5. Composition telle que revendiquée dans l'une quelconque des revendications précédentes dans laquelle l'au moins un polymère liquide (A) est choisi parmi :
- les polymères liquides de polybutadiène **caractérisés par** un (Mw) compris entre 500 et 30000 g/mol et/ou une température de transition vitreuse (Tg) comprise entre -105°C et 0°C ; et
- les polymères liquides de polyisoprène **caractérisés par** un Mw compris entre 3000 et 80000 g/mol et/ou une température de transition vitreuse (Tg) comprise entre -70°C et -30°C.

6. Composition telle que revendiquée dans l'une quelconque des revendications précédentes dans laquelle l'au moins une résine (B) est choisie parmi :
- les résines hydrocarbonées dérivées de coumarone-indène, de styrène-indène, de styrène-alkylstyrène, et les résines hydrocarbonées aliphatiques, ayant de préférence un poids moléculaire moyen en poids compris entre 500 et 3000 g/mol ;
- les résines à base d'alkylphénol-formaldéhyde, les résines alkylphénoliques modifiées à la colophane, les résines à base d'alkylphénol-acétylène, les résines alkylphénoliques modifiées et les résines à base de terpène-phénol ;
- les résines naturelles polyterpéniques choisies parmi les homo- ou copolymères d'alpha-pinène, de bêta-pinène, de limonène et de monomères vinyliques aromatiques (styrène) et/ou de monomères aromatiques (phénol), et les résines naturelles à base de colophane.

7. Composition telle que revendiquée dans l'une quelconque des revendications précédentes, dans laquelle l'huile plastifiante (C) est **caractérisée par** un poids moléculaire moyen en poids (Mw) non supérieur à 600 g/mol, ou, en cas de classe RAE (Extrait Aromatique Résiduel), compris entre 400 et 10000 g/mol et/ou par une température de transition vitreuse (Tg) inférieure à -30°C.

8. Composition telle que revendiquée dans l'une quelconque des revendications précédentes, dans laquelle l'au moins un polymère liquide (A) est un polybutadiène liquide et/ou l'au moins une résine (B) est un copolymère de terpène/styrène et/ou l'au moins une huile plastifiante (C) est un TDAE (Extrait Aromatique de Distillat Traité).

9. Composition telle que revendiquée dans l'une quelconque des revendications précédentes, dans laquelle le mélange (D) de polymères élastomères diéniques solides comprend
40 à 90 phr d'au moins un polymère de styrène-butadiène (SBR),
0 à 50 phr d'au moins un polymère de polybutadiène (BR), et
10 à 60 phr d'au moins un polymère de polyisoprène (IR) ; ou
0 à 50 phr d'au moins un polymère de styrène-butadiène (SBR),
30 à 80 phr d'au moins un polymère de polybutadiène (BR), et
20 à 70 phr d'au moins un polymère de polyisoprène (IR) .

10. Composition telle que revendiquée dans l'une quelconque des revendications précédentes, dans laquelle ledit polymère de polyisoprène élastomère diénique solide (IR) est un caoutchouc naturel (NR).

11. Composition telle que revendiquée dans l'une quelconque des revendications précédentes, comprenant en outre :
- 0,5 à 10 phr d'au moins un agent d'activation pour la vulcanisation ; et/ou
- 0,05 à 10 phr d'au moins un accélérateur pour la vulcanisation, et/ou
- 0,05 à 2 phr d'au moins un retardateur de vulcanisation, et/ou
- 0,1 à 20 phr d'au moins un agent de couplage (G).

12. Composant pour pneus d'hiver comprenant une composition élastomère obtenue en utilisant la composition élastomère vulcanisable telle que revendiquée dans l'une quelconque des revendications précédentes 1 à 11.

13. Pneu d'hiver pour véhicules comprenant un composant de pneu comprenant une composition élastomère vulcanisée obtenue par vulcanisation de la composition élastomère vulcanisable telle que revendiquée dans l'une quelconque des revendications 1 à 11.

14. Composant tel que revendiqué dans la revendication 12 ou pneu tel que revendiqué dans la revendication 13, dans lequel ledit composant n'est pas la couche la plus interne (calandrage).

15. Composant tel que revendiqué dans la revendication 12 ou 14 ou pneu tel que revendiqué dans la revendication 13 ou 14, dans lequel ledit composant est une bande de roulement.
